(19) Europäisches Patentamt
European Patent Office
Office européen des brevets

(11) **EP 2 137 783 B1**

(12) # EUROPÄISCHE PATENTSCHRIFT

(45) Veröffentlichungstag und Bekanntmachung des Hinweises auf die Patenterteilung:
**21.09.2011 Patentblatt 2011/38**

(21) Anmeldenummer: **08716318.4**

(22) Anmeldetag: **06.03.2008**

(51) Int Cl.:
***H01M 8/10*** *(2006.01)*

(86) Internationale Anmeldenummer:
**PCT/EP2008/001803**

(87) Internationale Veröffentlichungsnummer:
**WO 2008/107192 (12.09.2008 Gazette 2008/37)**

(54) **POLYMERELEKTROLYTMEMBRAN MIT FUNKTIONALISIERTEN NANOPARTIKELN**
POLYMER ELECTROLYTE MEMBRANE WITH FUNCTIONALIZED NANOPARTICLES
MEMBRANE POLYÉLECTROLYTE À NANOPARTICULES FONCTIONNALISÉES

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **08.03.2007 DE 102007011424**

(43) Veröffentlichungstag der Anmeldung:
**30.12.2009 Patentblatt 2009/53**

(73) Patentinhaber:
- **Elcomax Membranes Gmbh**
  **81737 München (DE)**
- **LANXESS Deutschland GmbH**
  **51369 Leverkusen (DE)**
- **Rhein Chemie Rheinau GmbH**
  **68219 Mannheim (DE)**

(72) Erfinder:
- **REICHE, Annette**
  **37079 Göttingen (DE)**
- **MELZNER, Dieter**
  **37075 Götttingen (DE)**
- **MÄHR, Ulrich**
  **14052 Berlin (DE)**
- **GRONWALD, Oliver**
  **60316 Frankfurt/Main (DE)**
- **OBRECHT, Werner**
  **47447 Moers (DE)**
- **FRÜH, Thomas**
  **67112 Mutterstadt (DE)**
- **ZISER, Torsten**
  **69488 Birkenau (DE)**

(74) Vertreter: **Grättinger Möhring von Poschinger Patentanwälte Partnerschaft**
**Wittelsbacherstrasse 5**
**82319 Starnberg (DE)**

(56) Entgegenhaltungen:
**WO-A-2004/005380 US-A1- 2006 199 059**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 137 783 B1

**Beschreibung**

Die vorliegende Erfindung betrifft eine Polymerelektrolytmembran für Hochtemperaturbrennstoffzellen, umfassend eine Polymermatrix aus mindestens einem basischen Polymer und ein oder mehrere Dotierungsmittel, wobei ionogene Gruppen enthaltende Teilchen mit einem mittleren Teilchendurchmesser im Nanometerbereich in die Polymermatrix eingebettet sind und die ionogene Gruppen enthaltenden Teilchen in einer Konzentration von weniger als 50%, bezogen auf die Masse der Polymermatrix, homogen in der Polymermatrix verteilt sind, und deren Herstellung und Verwendung, insbesondere in Hochtemperaturbrennstoffzellen.

Im Stand der Technik sind Polymerelektrolytmembranen beispielsweise vom Nafion-Typ auf Basis perfluorierter Sulfonsäuregruppen enthaltender Polymere bekannt. Aufgrund der Bindung des Ladungstransports in diesen Membranen an die Anwesenheit von Wasser ist der Betriebsbereich entsprechender Polymerelektrolytmembran-Brennstoffzellen jedoch auf maximal 100 °C beschränkt. Um eine höhere Betriebstemperatur zu erzielen, wurden Membranen für Brennstoffzellen vorgeschlagen, welche anorganische Teilchen aufweisen (vgl. DE 199 19 988 A1, DE 102 05 849 A1, WO 03/063266 A2 und WO 03/081691 A2). Membranen für Brennstoffzellen, die eine andere Sorte von Teilchen verwenden, sind bislang nicht bekannt.

DE 10 2004 009 396 A1 beschreibt Membranen für Brennstoffzellen mit verbesserten elektrischen, mechanischen und thermischen Eigenschaften im Brennstoffzellenbetrieb. Diese Membranen bestehen aus einem Polymer, besonders bevorzugt aus einem Kunststoff, einem Naturstoff, Silikon oder Kautschuk, und einer protonenleitenden Substanz. Derartige Membranen weisen jedoch keine technisch signifikanten Leitfähigkeiten bei Raumtemperatur auf und zeigen geringe mechanische Stabilität.

Somit liegt der vorliegenden Erfindung die Aufgabe zugrunde, eine Polymermembran für Brennstoffzellen bereitzustellen, die sich durch eine verbesserte Leitfähigkeit bei Raumtemperatur und durch eine hohe Langzeitstabilität im Brennstoffzellenbetrieb auszeichnen soll. Ferner soll eine Polymermembran für Brennstoffzellen bereitgestellt werden, welche bei einer hohen Betriebstemperatur in Brennstoffzellen über einen langen Zeitraum effizient arbeiten soll und eine hohe Protonenleitfähigkeit aufweisen soll, ohne daß wesentliche Mengen der für die Protonenleitung verantwortlichen Komponente beim Betrieb in einer Brennstoffzelle ausgetragen werden.

Diese technische Aufgabe wird durch Bereitstellen der in den Ansprüchen gekennzeichneten Ausführungsformen gelöst.

Insbesondere wird gemäß der vorliegenden Erfindung eine Polymerelektrolytmembran für Brennstoffzellen bereitgestellt, umfassend eine Polymermatrix aus mindestens einem basischen Polymer und ein oder mehrere Dotierungsmittel, wobei ionogene Gruppen enthaltende Teilchen mit einem mittleren Teilchendurchmesser im Nanometerbereich in die Polymermatrix eingebettet sind und die ionogene Gruppen enthaltenden Teilchen in einer Konzentration von weniger als 50%, bezogen auf die Masse der Polymermatrix, homogen in der Polymermatrix verteilt sind.

In der erfindungsgemäßen Polymerelektrolytmembran liegen die ionogene Gruppen enthaltenden Teilchen in einer Konzentration von weniger als 50%, bezogen auf die Masse der Polymermatrix, homogen in der Polymermatrix verteilt vor. Dadurch wird erreicht, daß sich die in der Matrix vorhandenen, ionogene Gruppen enthaltenden Teilchen im wesentlichen nicht berühren und von Matrixbildendem Polymer umgeben sind. Gemäß einer bevorzugten Ausführungsform der erfindungsgemäßen Polymerelektrolytmembran liegen die ionogene Gruppen enthaltenden Teilchen in einer Konzentration von weniger als 40%, besonders bevorzugt 10 bis 30%, bezogen auf die Masse der Polymermatrix, homogen in der Polymermatrix verteilt vor.

Unter ionogene Gruppen enthaltenden Teilchen werden gemäß der vorliegenden Erfindung insbesondere oligomere und/oder polymere Teilchen verstanden, welche eine feste Phasengrenze mit der umgebenden Polymermatrix aufweisen können, jedoch nicht notwendigerweise aufweisen müssen. Eine wesentliche Eigenschaft der ionogene Gruppen enthaltenden Teilchen besteht vor allem darin, daß diese nicht, wie beispielsweise niedermolekulare protonenleitende Komponenten, aus der Polymermatrix bzw. der Polymerelektrolytmembran ausgetragen werden. Geeignete ionogene Gruppen enthaltende Teilchen sind vor allem organische Teilchen, die hauptsächlich aus einem oder mehreren organischen Polymer(en) und/oder Oligomer(en) aufgebaut sind. Die für die ionogene Gruppen enthaltenden, organischen Teilchen geeigneten Polymere oder Oligomere unterliegen grundsätzlich keiner wesentlichen Beschränkung. Es ist jedoch bevorzugt, daß die ionogene Gruppen enthaltenden Teilchen hauptsächlich aus einem kautschukartigen Polymer oder Oligomer oder einem nicht-kautschukartigen Polymer oder Oligomer, vorzugsweise einem thermoplastischen Polymer oder Oligomer, aufgebaut sind. Die ionogene Gruppen enthaltenden Teilchen können oligomerer und/oder polymerer Natur sein.

Die ionogene Gruppen enthaltenden Teilchen können beispielsweise hauptsächlich aus Basismonomeren mit mindestens einer polymerisierbaren oder copolymerisierbaren Gruppe, vorzugsweise mindestens zwei und besonders bevorzugt zwei bis vier polymerisierbaren oder copolymerisierbaren Gruppen, insbesondere C=C-Doppelbindungen, aufgebaut werden.

Geeignete Basismonomere, die vorzugsweise eine bis vier polymerisierbare oder copolymerisierbare Gruppe (n) aufweisen, sind beispielsweise Butadien, Styrol, Acrylnitril, Isopren, Ester der Acryl- und Methacrylsäure, Tetrafluorethylen, Vinylidenfluorid, Hexafluorpropen, 2-Chlorbutadien, 2,3-Dichlorbutadien, doppelbindungshaltige Carbonsäuren, wie Acrylsäure, Methacrylsäure, Maleinsäure oder Itaconsäure, doppelbindungshaltige Sulfonsäuren, doppelbindungshaltige Phosphonsäuren, doppelbindungshaltige Hydroxyverbindungen, wie Hydroxyethylmethacrylat, Hydroxyethylacrylat oder Hydroxybutylmethacrylat, Amin-funktionalisierte (Meth)acrylate, Diisopropenylbenzol, Divinylbenzol, Divinylether, Divinylsulfon, Diallylphthalat, Triallylcyanurat, Triallylisocyanurat, 1,2-Polybutadien, N,N'-m-Phenylenmaleinimid, 2,4-Toluylenbis(maleinimid) und/oder Triallyltrimellitat. Insbesondere wenn eine effiziente Quervernetzung erwünscht ist, werden Basismonomere mit zwei bis vier polymerisierbaren oder copolymerisierbaren Gruppen ausgewählt. Ferner können die ionogene Gruppen enthaltenden Teilchen hauptsächlich aus Acrylaten und/oder Methacrylaten von vorzugsweise mehrwertigen, besonders bevorzugt zwei- bis vierwertigen Alkoholen, wie Ethylenglykol, Propandiol-1,2, Butandiol, Hexandiol, Polyethylenglykol mit 2 bis 20, vorzugsweise 2 bis 8 Oxyethyleneinheiten, Neopentylglykol, Bisphenol-A, Glycerin, Trimethylolpropan, Pentaerythrit oder Sorbit mit ungesättigten Polyestern aus aliphatischen Di- und Polyolen, und Maleinsäure, Fumarsäure und/oder Itaconsäure oder Gemischen davon aufgebaut werden.

Beispiele für geeignete Basismonomere sind insbesondere folgende Verbindungen:

Vinylcarbazol, N-Vinyl-1-pyrrolidinon, N-Allyl-Harnstoff, N-Allyl Thioharnstoff, sekundäre Amino-(meth)-acrylsäureester, wie 2-tert.-Butylaminoethylmethacrylat, 2-tert.-Butylaminoethylmethacrylamid, Dimethylaminopropylmethacrylamid, 2-Dimethylaminoethylmethacrylat, Vinylimidazol, wie 1-Vinylimidazol, Vinylpyridin, wie 2-Vinylpyridin und 4-Vinylpyridin, Acrylamid, 2-Acrylamidoglykolsäure, 2-Acrylamido-2-methyl-1-propansulfonsäure, Acrylsäure-[2-(((butylamino)-carbonyl)-oxyl)ethylester], Acrylsäure-(2-diethylaminoethylester), Acrylsäure-(2-dimethylamino)-ethylester), Acrylsäure-(3-(dimethylamino)-propylester), Acrylsäureisopropylamid, Acrylsäurephenylamid, Acrylsäure-(3-sulfopropylester) Kaliumsalz, Methacrylsäureamid, Methacrylsäure-2-aminoethylester-hydrochlorid, Methacrylsäure-(2-(tert.-butylamino)-ethylester, Methacrylsäure-2-dimethylamino)-methylester, Methacrylsäure-(3-dimethylaminopropylamid), Methacrylsäureisopropylamid, Methacrylsäure-(3-sulfopropylester) Kaliumsalz, 3-Vinylanilin, 4-Vinylanilin, N-Vinylcaprolactam, N-Vinylformamid, 1-Vinyl-2-pyrrolidon, 5-Vinyluracil.

Gemäß einer bevorzugten Ausführungsform weisen die ionogene Gruppen enthaltenden Teilchen an der Oberfläche oder in dem gesamten Teilchen ionogene Gruppen auf. Ferner können auch funktionelle Gruppen verwendet werden, die nach einer chemischen Umsetzung, beispielsweise einer Entschützungsreaktion, einer Hydrolyse, einer Additionsreaktion oder einer Substitutionsreaktion, in ionogene Gruppen, vorzugsweise Säuregruppen, umgewandelt werden können.

Die ionogenen Gruppen können vor allem an der Oberfläche der Teilchen durch chemische Umsetzung von Reagentien, die insbesondere mit C=C-Doppelbindungen reaktiv sind, mit an der Oberfläche eines vernetzten bzw. vorvernetzten Polymer- oder Oligomerteilchens vorhandenen reaktiven Gruppen eingeführt werden. Reagentien, die mit an der Oberfläche eines vernetzten bzw. vorvernetzten Teilchens vorhandenen reaktiven Gruppen, insbesondere C=C-Doppelbindungen, umgesetzt werden können, sind beispielsweise Aldehyde, Hydroxyverbindungen, Carboxylverbindungen, Nitrilverbindungen, Schwefelverbindungen, wie Verbindungen mit Mercapto-, Dithiocarbamat-, Polysulfid-, Xanthogenat-, Thiobenzthiazol- und/oder Dithiophosphonsäuregruppen, ungesättigte Carbonsäuren oder Dicarbonsäuren, ungesättigte Sulfonsäuren, ungesättigte Phosphonsäuren, N,N'-m-Phenylendiamin, Acrylsäure, Methacrylsäure, Hydroxyethylmethacrylat, Hydroxyethylacrylat, Hydroxybutylmethacrylat, Acrylamid, Methacrylamid, Amin-funktionalisierte (Meth)acrylate, wie Acrylnitril, Acrolein, N-Vinyl-2-pyrrolidon, N-Allyl-Harnstoff und N-Allyl-Thioharnstoff, und Derivate und Gemische davon.

Vorzugsweise sind die ionogene Gruppen enthaltenden Teilchen an der Oberfläche oder in dem gesamten Teilchen durch ionogene Gruppen, besonders bevorzugt durch kovalent gebundene Säuregruppen, beispielsweise Säuregruppen von ein- oder mehrwertigen Säuren, funktionalisiert, wobei Säuregruppen von mehrwertigen Säuren besonders bevorzugt sind. Die an der Oberfläche oder in dem gesamten Teilchen kovalent gebundenen Säuregruppen sind vorzugsweise Carbonsäure-, Sulfonsäure-, Phosphonsäure- und/oder Phosphorsäuregruppen mit einer oder mehreren Säuregruppe(n). Es ist jedoch auch möglich, andere Säuregruppen mit einer ähnlichen Acidität oder in Säuregruppen umwandelbare funktionelle Gruppen einzusetzen. Gemäß einer besonders bevorzugten Ausführungsform werden die ionogenen Gruppen ausgewählt aus einer oder mehreren der folgenden funktionellen Gruppen: $-COOH$, $-SO_3H$, $-OSO_3H$, $-P(O)(OH)_2$, $-O-P(OH)_2$ und $-O-P(O)(OH)_2$ und/oder deren Salzen und/oder deren Derivate, wie insbesondere Partialester davon. Die Salze stellen die konjugierten Basen zu den sauren funktionellen Gruppen dar, also $-COO^-$, $-SO_3^-$, $-OSO_3^-$, $-P(O)_2(OH)^-$ oder $-P(O)_3^{3-}$, $-O-P(O)_2^{2-}$ und- $OP(O)_2(OH)^-$ oder $-OP(O)_3^{2-}$ in der Form ihrer Metall-, bevorzugt Alkalimetall- oder Ammoniumsalze.

Die ionogene Gruppen enthaltenden Teilchen können folglich ionogene Gruppen an der Oberfläche der Teilchen aufweisen und eine Kern-Schale-artige Struktur bilden oder im wesentlichen in dem gesamten Teilchen ionogene Gruppen tragen, d.h. praktisch homogen bzw. durchgehend funktionalisiert sein.

Die vorstehend beschriebenen ionogenen Gruppen können durch unterschiedliche Verfahren an die Oberfläche oder in das gesamte Teilchen eingeführt werden.

Es ist jedoch bevorzugt, ionogene Gruppen enthaltende Teilchen durch Copolymerisation mindestens eines der vorstehenden Basismonomere in Gegenwart mindestens eines Monomers mit ionogenen Gruppen, vorzugsweise Säuregruppen, zu bilden. Durch dieses Verfahren, das auch als einstufiges Verfahren bezeichnet werden kann, können oligomere aber auch polymere ionogene Gruppen enthaltende Teilchen erhalten werden. Die Copolymerisation in homogener Phase, beispielsweise in Lösung oder in Substanz, eignet sich besonders gut zur Bildung von oligomeren ionogene Gruppen enthaltenden Teilchen mit den vorstehenden ionogenen Gruppen in dem gesamten Teilchen. Bei der Copolymerisation durch beispielsweise Emulsionspolymerisation, d.h. bei Anwendung einer Emulsion eines Monomers bzw. Monomergemischs in beispielsweise Wasser, lassen sich insbesondere polymere ionogene Gruppen enthaltende Teilchen herstellen, bei welchen die ionogenen Gruppen vorzugsweise auf der Mikrogeloberfläche lokalisiert sind. Es ist jedoch auch möglich, ausgehend von einem Basismonomer mit geeigneten ionogenen Gruppen, vorzugsweise Säuregruppen oder in Säuregruppen umwandelbare Gruppen, ein oligomeres oder polymeres Teilchen aufzubauen. Beispielsweise ist denkbar, ein Basismonomer, welches in Säuregruppen umwandelbare Gruppen aufweist, zuerst zu einem oligomeren oder polymeren Teilchen zu vernetzen und erst anschließend durch chemische Modifikation, beispielsweise einer Entschützungsreaktion, einer Hydrolyse, einer Additionsreaktion oder einer Substitutionsreaktion, die gewünschten ionogenen Gruppen an der Oberfläche des Teilchens zu bilden, um insbesondere protonenleitende Eigenschaften zu erzeugen.

Darüber hinaus ist es bevorzugt, zuerst mindestens eines der vorstehenden Basismonomere derart zu vernetzen, daß ein Oligomer-, Präpolymer oder Polymerteilchen gebildet wird, und anschließend mindestens ein Monomer mit ionogenen Gruppen, vorzugsweise Säuregruppen, an der Oberfläche dieses Teilchens aufzupfropfen, um eine Kern-Schale-artige Struktur zu bilden. Gemäß dieser Verfahrensweise, die einem zweistufigen Verfahren entspricht, können oligomere oder polymere ionogene Gruppen enthaltende Teilchen hergestellt werden, welche die ionogenen Gruppen im wesentlichen nur an der Oberfläche oder einem oberflächennahen Bereich tragen. Die Verfahrensweise in homogener Phase, beispielsweise in Lösung oder in Substanz, eignet sich insbesondere zur Bildung von oligomeren ionogene Gruppen enthaltenden Teilchen und die Verfahrensweise der Emulsionspolymerisation eignet sich besonders zur Herstellung von polymeren ionogene Gruppen enthaltenden Teilchen. In diesem Zusammenhang ist es bevorzugt, daß das Aufpfropfen eines Monomers mit ionogenen Gruppen einen hohen Bedeckungsgrad mit den ionogenen Gruppen an der Oberfläche des Teilchens ergibt. Vorzugsweise ist die Oberfläche des ionogene Gruppen enthaltenden Teilchens nahezu quantitativ mit ionogenen Gruppen, vorzugsweise Säuregruppen, funktionalisiert, was bedeutet, daß im wesentlichen jede an der Oberfläche eines vernetzten bzw. vorvernetzten Teilchens vorhandene reaktive Gruppe mit einem Monomer mit ionogenen Gruppen abreagiert hat.

Gemäß einer bevorzugten Ausführungsform sind die Monomere mit ionogenen Gruppen Monomere mit Säuregruppen, wie (Meth)acrylsäure, Maleinsäure, Vinylsulfonsäure, Vinylphosphonsäure und/oder Styrolsulfonsäure, sowie Derivate und Gemische davon. Gemäß einer besonders bevorzugten Ausführungsform werden die ionogenen Gruppen ausgewählt aus einer oder mehreren der folgenden funktionellen Gruppen: -COOH, $-SO_3H$, $-OSO_3H$, $-P(O)(OH)_2$, $-O-P(OH)_2$ und $-O-P(O)(OH)_2$ und/oder deren Salzen und/oder deren Derivate, wie insbesondere Partialester davon. Die Salze stellen die konjugierten Basen zu den sauren funktionellen Gruppen dar, also $-COO^-$, $-SO_3^-$,- $OSO_3^-$, $-P(O)_2(OH)^-$ oder $-P(O)_3^{3-}$, $-O-P(O)_2^{2-}$ und $-OP(O)_2(OH)^-$ oder $-OP(O)_3^{2-}$ in der Form ihrer Metall-, bevorzugt Alkalimetall- oder Ammoniumsalze.

Gemäß einer bevorzugten Ausführungsform sind die ionogene Gruppen enthaltenden Teilchen organische Polymere und/oder Oligomere, die aus mindestens Polystyrol und Vinylsulfonsäure hergestellt sind.

Die Bildung der ionogene Gruppen enthaltenden Teilchen durch Polymerisation bzw. Copolymerisation wird durch übliche Verfahren, beispielsweise thermisch, photochemisch oder radikalisch, gegebenenfalls unter Zugabe eines Radikalstarters vom Peroxidtyp oder Azotyp durchgeführt. Geeignete Radikalstarter vom Peroxidtyp oder Azotyp sind einem Fachmann auf dem einschlägigen Fachgebiet bekannt und können in geeigneter Weise ausgewählt werden.

Die Teilchengröße der ionogene Gruppen enthaltenden Teilchen unterliegt grundsätzlich keiner wesentlichen Beschränkung, solange sie im Nanometerbereich liegt. Die ionogene Gruppen enthaltenden Teilchen weisen vorzugsweise einen mittleren Teilchendurchmesser in einem Bereich von 5 nm bis 500 nm auf, wobei ein Bereich von 20 nm bis 400 nm besonders bevorzugt ist und ein Bereich von 30 nm bis 300 nm am meisten bevorzugt ist.

Wenn die ionogene Gruppen enthaltenden Teilchen polymerer Natur sind, können diese eine feste Phasengrenze mit der umgebenden Polymermatrix aufweisen. Es ist jedoch auch möglich, daß diese keine feste Phasengrenze mit der umgebenden Polymermatrix aufweisen. Die Teilchengröße derartiger Polymere, die auch als Mikrogele bezeichnet werden können, liegt vorzugsweise in einem Bereich von etwa 40 nm bis etwa 200 nm. Diese ionogene Gruppen enthaltenden Polymerteilchen werden vorzugsweise durch Emulsionspolymerisation hergestellt.

Unter Emulsionspolymerisation im Sinne der vorliegenden Erfindung wird insbesondere ein an sich bekanntes Verfahren verstanden, bei dem als Reaktionsmedium Wasser verwendet wird, worin die verwendeten Monomere in Anwesenheit von Emulgatoren und radikalbildenden Substanzen unter Bildung von wässrigen Polymerlatices polymerisiert werden (s. u.a. Römpp Lexikon der Chemie, Band 2, 10. Auflage 1997; P. A. Lovell, M. S. El-Aasser, Emulsion Polymerization and Emulsion Polymers, John Wiley & Sons, ISBN: 0 471 96746 7; H. Gerrens, Fortschr. Hochpolym.

Forsch. 1, 234 (1959)). Die Emulsionspolymerisation liefert im Unterschied zur Suspensions- oder Dispersionspolymerisation in der Regel feinere Teilchen, welche einen niedrigeren Partikelabstand in einer Matrix ermöglichen. Die kleineren Teilchen liegen mit ihrem geringen mittleren Durchmesser unterhalb der kritischen Fehlstellengröße, d.h. die sie enthaltenden Matrices unterliegen nur geringen mechanischen Beeinträchtigungen, bei entsprechendem Dispersionsgrad.

Durch die Wahl der Monomere stellt man die Glasübergangstemperatur und die Breite des Glasübergangs der Polymerteilchen ein. Die Bestimmung der Glasübergangstemperatur (Tg) und der Breite des Glasübergangs (ΔTg) der Mikrogele bzw. der im wesentlichen kugelförmigen Polymerteilchen erfolgt mittels Differential-Scanning-Kalorimetrie (DSC), bevorzugt wie im folgenden beschrieben. Dazu werden für die Bestimmung von Tg und ΔTg zwei Abkühl/Aufheiz-Zyklen durchgeführt. Tg und ΔTg werden im zweiten AufheizZyklus bestimmt. Für die Bestimmungen werden etwa 10-12 mg des ausgewählten Mikrogels in einem DSC-Probenbehälter (Standard-Aluminium-Pfanne) von Perkin-Elmer eingesetzt. Der erste DSC-Zyklus wird durchgeführt, indem die Probe zuerst mit flüssigem Stickstoff auf -100°C abgekühlt und dann mit einer Geschwindigkeit von 20K/min auf +150°C aufgeheizt wird. Der zweite DSC-Zyklus wird durch sofortige Abkühlung der Probe begonnen, sobald eine Probentemperatur von +150°C erreicht ist. Die Abkühlung erfolgt durch rasches Abkühlen mit flüssigem Stickstoff. Im zweiten Aufheizzyklus wird die Probe wie im ersten Zyklus noch einmal auf +150°C aufgeheizt. Die Aufheizgeschwindigkeit im zweiten Zyklus ist erneut 20K/min. Tg und ΔTg werden graphisch an der DSC-Kurve des zweiten Aufheizvorgangs bestimmt. Für diesen Zweck werden an die DSC-Kurve drei Geraden angelegt. Die 1. Gerade wird am Kurventeil der DSC-Kurve unterhalb Tg, die 2. Gerade an dem durch Tg verlaufenden Kurvenast mit Wendepunkt und die 3. Gerade an dem Kurvenast der DSC- Kurve oberhalb Tg angelegt. Auf diese Weise werden drei Geraden mit zwei Schnittpunkten erhalten.

Beide Schnittpunkte sind jeweils durch eine charakteristische Temperatur gekennzeichnet. Die Glasübergangstemperatur Tg erhält man als Mittelwert dieser beiden Temperaturen und die Breite des Glasübergangs ΔTg erhält man aus der Differenz der beiden Temperaturen.

Kautschukartige Polymerteilchen weisen eine Glasübergangstemperatur von im allgemeinen < 23°C auf. Thermoplastische Polymerteilchen weisen im allgemeinen eine Glasübergangstemperatur von > 23°C auf.

Die Breite des Glasübergangs ist bei den erfindungsgemäß verwendeten Polymerteilchen bevorzugt größer als 5 °C, bevorzugter größer als 10°C.

Kautschukartige Polymerteilchen sind bevorzugt solche auf Basis von konjugierten Dienen wie Butadien, Isopren, 2-Chlorbutadien und 2,3-Dichlorbutadien, sowie Ethen, Ester der Acryl- und Methacrylsäure, Vinylacetat, Styrol oder Derivate davon, Acrylnitril, Acrylamide, Methacrylamide, Tetrafluorethylen, Vinylidenfluorid, Hexafluorpropen, doppelbindungshaltige Hydroxyverbindungen wie z.B. Hydroxyethylmethacrylat, Hydroxyethylacrylat, Hydroxypropylacrylat, Hydroxybutylmethacrylat, Acrolein oder Kombinationen davon.

Bevorzugte Monomere bzw. Monomerkombinationen schließen ein: Butadien, Isopren, Acrylnitril, Styrol, α-Methylstyrol, Chloropren, 2,3-Dichlorbutadien, Butylacrylat, 2-Ethylhexylacrylat, Hydroxyethylmethacrylat, Tetrafluorethylen, Vinylidenfluorid und Hexafluorpropen.

"Auf Basis" bedeutet hier, dass die Polymerteilchen bevorzugt zu mehr als 60 Gew.%, bevorzugt mehr als 70 Gew.-%, bevorzugter zu mehr als 90 Gew.-% aus den genannten Monomeren bestehen.

Die Polymerteilchen können vernetzt oder unvernetzt sein. Im Falle vernetzter Polymerteilchen spricht man auch von Mikrogelen bzw. im wesentlichen kugelförmigen Polymerteilchen. Die Polymerteilchen können insbesondere solche auf Basis von Homopolymeren oder statistischen Copolymeren sein. Die Begriffe Homopolymere und statistische Copolymere sind dem Fachmann bekannt und beispielsweise erläutert bei Vollmert, Polymer Chemistry, Springer Verlag 1973.

Als Polymerbasis der kautschukartigen, vernetzten oder unvernetzten Polymerteilchen, enthaltend ionogene Gruppen, können insbesondere dienen:

BR: Polybutadien,
ABR: Butadien/Acrylsäure-$C_{1-4}$Alkylestercopolymere,
IR: Polyisopren,
SBR: statistische Styrol-Butadien-Copolymerisate mit Styrolgehalten von 1-60, vorzugsweise 5-50 Gewichtsprozent,
FKM: Fluorkautschuk,
ACM: Acrylatkautschuk,
NBR: Polybutadien-Acryinitril-Copolymerisate mit Acrylnitrilgehalten von 5- 60, vorzugsweise 10- 60 Gewichtsprozent,
CR: Polychloropren
EAM: Ethylen/Acrylatcopolymere,
EVM: Ethylen/Vinylacetatcopolymere.

Erfindungsgemäße nicht-kautschukartige, insbesondere thermoplastische Polymerteilchen, weisen zweckmäßig eine Glasübergangstemperatur Tg von mehr als 23°C auf. Die Breite des Glasübergangs ist bei den thermoplastartigen Polymerteilchen bevorzugt größer als 5 °C (wobei die Tg bzw. die Breite des Glasübergangs wie oben beschrieben bestimmt wird). Nicht-kautschukartige, insbesondere thermoplastische Polymerteilchen sind bevorzugt solche auf Basis von Methacrylaten, insbesondere Methylmethacrylat, Styrol oder Styrolderivaten, wie α-Methylstyrol, para-Methylstyrol, Acrylnitril, Methacrylnitril, Vinylcarbazol oder Kombinationen davon. "Auf Basis" bedeutet hier, dass die Polymerteilchen bevorzugt zu mehr als 60 Gew.-%, bevorzugt mehr als 70 Gew.-%, bevorzugter zu mehr als 90 Gew.-% aus den genannten Monomeren bestehen.

Bevorzugtere thermoplastische Polymerteilchen sind solche auf Basis von Methacrylaten, insbesondere Methylmethacrylat, Styrol, α-Methylstyrol und Acrylnitril.

Die Polymerteilchen weisen bevorzugt eine annähernd kugelförmige Geometrie auf.

Die erfindungsgemäß verwendeten Polymerteilchen weisen vorzugsweise einen mittleren Teilchendurchmesser im Bereich von 5 nm bis 500 nm, besonders bevorzugt von 20 nm bis 400 nm, am meisten bevorzugt von 30 nm bis 300 nm auf. Der mittlere Teilchendurchmesser wird mittels Ultrazentrifugation mit dem wässrigen Latex der Polymerteilchen aus der Emulsionspolymerisation bestimmt. Die Methode liefert einen Mittelwert für den Teilchendurchmesser unter Berücksichtigung etwaiger Agglomerate. (H. G. Müller (1996) Colloid Polymer Science 267: 1113-1116 sowie W. Scholtan, H. Lange (1972) Kolloid-Z u. Z. Polymere 250: 782). Die Ultrazentrifugation hat den Vorteil, dass die gesamte Teilchengrößenverteilung charakterisiert wird und verschiedene Mittelwerte wie Zahlenmittel, Gewichtsmittel aus der Verteilungskurve berechnet werden können.

Die erfindungsgemäß verwendeten mittleren Durchmesserangaben beziehen sich auf das Gewichtsmittel.

Nachfolgend werden Durchmesserangaben wie $d_{10}$, $d_{50}$ und $d_{80}$ verwendet. Diese Angaben bedeuten dass 10, 50 bzw. 80 Gew. % der Teilchen einen Durchmesser besitzen, der kleiner als der entsprechende Zahlenwert in "nm" ist.

Die Durchmesserbestimmung mittels dynamischer Lichtstreuung führt in erster Näherung zu vergleichbaren mittleren Teilchendurchmessern. Sie wird ebenfalls am Latex durchgeführt. Üblich sind Laser, die bei 633 nm (rot) und bei 532 nm (grün) arbeiten. Bei der dynamischen Lichtstreuung wird nicht wie bei der Ultrazentrifugation die gesamte Teilchengrößenverteilung charakterisiert, sondern man erhält einen Mittelwert, bei dem große Teilchen überproportional gewichtet werden.

Die erfindungsgemäß verwendeten Polymerteilchen weisen bevorzugt einen gewichtsmittleren Teilchendurchmesser im Bereich von 5 nm bis 500 nm, bevorzugt von 20 nm bis 400 nm, besonders bevorzugt von 30 nm bis 300 nm auf.

Die erfindungsgemäßen ionogene Gruppen enthaltenden Teilchen können durch Emulsionspolymerisation hergestellt werden, wobei durch Variation der Einsatzstoffe wie Emulgatorkonzentration, Initiatorkonzentration, Flottenverhältnis von organischer zu wässriger Phase, Verhältnis von hydrophilen zu hydrophoben Monomeren, Menge an vernetzendem Monomer, Polymerisationstemperatur etc. die Teilchengröße in einem weiten Durchmesserbereich eingestellt wird.

Nach der Polymerisation können die Latices durch Vakuumdestillation oder durch Behandlung mit überhitztem Wasserdampf behandelt werden, um flüchtige Komponenten, insbesondere nicht umgesetzte Monomeren abzutrennen.

Die Aufarbeitung der so hergestellten Polymerteilchen kann beispielsweise durch Eindampfen, Elektrolyt-Koagulation, durch Co-koagulation mit einem weiteren Latexpolymer, durch Gefrierkoagulation (vgl. US 2,187,146) oder durch Sprühtrocknung erfolgen.

Die durch Emulsionspolymerisation hergestellten ionogene Gruppen enthaltenden Polymerteilchen sind in einer bevorzugten Ausführungsform mindestens teilweise vernetzt.

Die Vernetzung der durch Emulsionspolymerisation hergestellten ionogene Gruppen enthaltenden Polymerteilchen erfolgt bevorzugt durch den Zusatz von polyfunktionellen Monomeren bei der Polymerisation, wie z.B. durch den Zusatz von Verbindungen mit mindestens zwei, vorzugsweise 2 bis 4 copolymerisierbaren C=C-Doppelbindungen, wie Diisopropenylbenzol, Divinylbenzol, Divinylether, Divinylsulfon, Diallylphthalat, Triallylcyanurat, Triallylisocyanurat, 1,2-Polybutadien, N,N'-m-Phenylenmaleimid, 2,4-Toluylenbis(maleimid), Triallyltrimellitat, Acrylate und Methacrylate von mehrwertigen, vorzugsweise 2- bis 4-wertigen $C_{2-10}$ Alkoholen, wie Ethylenglykol, Propandiol-1,2, Butandiol, Hexandiol, Polyethylenglykol mit 2 bis 20, vorzugsweise 2 bis 8 Oxyethyleneinheiten, Neopentylglykol, Bisphenol-A, Glycerin, Trimethylolpropan, Pentaerythrit, Sorbit sowie ungesättigten Polyestern aus aliphatischen Di- und Polyolen und Maleinsäure, Fumarsäure, und/oder Itaconsäure.

Die Vernetzung der ionogene Gruppen enthaltenden Polymerteilchen kann direkt während der Emulsionspolymerisation, wie durch Copolymerisation mit vernetzend wirkenden multifunktionellen Verbindungen oder durch anschließende Vernetzung wie untenstehend beschrieben erreicht werden. Die direkte Vernetzung während der Emulsionspolymerisation ist bevorzugt. Bevorzugte multifunktionelle Comonomere sind Verbindungen mit mindestens zwei, vorzugsweise 2 bis 4 copolymerisierbaren C=C-Doppelbindungen, wie Diisopropenylbenzol, Divinylbenzol, Divinylether, Divinylsulfon, Diallylphthalat, Triallylcyanurat, Triallylisocyanurat, 1,2-Polybutadien, N,N'-m-Phenylenmaleimid, 2,4-Toluylenbis(maleimid) und/oder Triallyltrimellitat. Darüber hinaus kommen in Betracht die Acrylate und Methacrylate von mehrwertigen, vorzugsweise 2- bis 4-wertigen $C_{2-10}$ Alkoholen, wie Ethylenglykol, Propandiol-1,2, Butandiol, Hexandiol, Polyethylenglykol mit 2 bis 20, vorzugsweise 2 bis 8 Oxyethyleneinheiten, Neopentylglykol, Bisphenol-A, Glycerin, Trimethylolpropan, Pentaerythrit, Sorbit mit ungesättigten Polyestern aus aliphatischen Di- und Polyolen sowie Maleinsäure, Fumarsäure, und/oder Itaconsäure.

Die Vernetzung während der Emulsionspolymerisation kann auch durch Fortführung der Polymerisation bis zu hohen Umsätzen oder im Monomerzulaufverfahren durch Polymerisation mit hohen internen Umsätzen erfolgen. Eine andere Möglichkeit besteht auch in der Durchführung der Emulsionspolymerisation in Abwesenheit von Reglern.

Für die Vernetzung der unvernetzten oder der schwach vernetzten Polymerteilchen im Anschluß an die Emulsionspolymerisation setzt man am besten die Latices ein, die bei der Emulsionspolymerisation erhalten werden.

Geeignete, vernetzend wirkende Chemikalien sind beispielsweise organische Peroxide, wie Dicumylperoxid, t-Butylcumylperoxid, Bis-(t-butyl-peroxyisopropyl)benzol, Di-t-butylperoxid, 2,5-Dimethylhexan-2,5-dihydroperoxid, 2,5-Dimethylhexin-3,2,5-dihydroperoxid, Dibenzoylperoxid, Bis-(2,4-dichlorobenzoyl) peroxid, t-Butylperbenzoat sowie organische Azoverbindungen, wie Azobisisobutyronitril und Azobiscyclohexannitril sowie Di- und Polymercaptoverbindungen, wie Dimercaptoethan, 1,6-Dimercaptohexan, 1,3,5-Trimercaptotriazin und Mercapto-terminierte Polysulfidkautschuke wie Mercapto-terminierte Umsetzungsprodukte von Bis-Chlorethylformal mit Natriumpolysulfid.

Die optimale Temperatur zur Durchführung der Nachvernetzung ist naturgemäß von der Reaktivität des Vernetzers abhängig und kann bei Temperaturen von Raumtemperatur bis etwa 180 °C gegebenenfalls unter erhöhtem Druck durchgeführt werden (siehe hierzu Houben-Weyl, Methoden der organischen Chemie, 4. Auflage, Band 14/2, Seite 848). Besonders bevorzugte Vernetzungsmittel sind Peroxide.

Die Vernetzung C=C-Doppelbindungen enthaltender Kautschuke zu Mikrogelen kann auch in Dispersion bzw. Emulsion bei gleichzeitiger, partieller, ggf. vollständiger, Hydrierung der C=C Doppelbindung durch Hydrazin wie in US 5,302,696 oder US 5,442,009 beschrieben oder ggf. andere Hydrierungsmittel, beispielsweise Organometallhydridkomplexe erfolgen.

Vor, während oder nach der Nachvernetzung kann ggf. eine Teilchenvergrößerung durch Agglomeration durchgeführt werden.

Die erfindungsgemäß eingesetzten vernetzten ionogene Gruppen enthaltenden Polymerteilchen weisen zweckmäßig in Toluol bei 23°C unlösliche Anteile (Gelgehalt) von mindestens etwa 70 Gew.-%, bevorzugter mindestens etwa 80 Gew.-%, noch bevorzugter mindestens etwa 90 Gew.-% auf. Der in Toluol unlösliche Anteil wird dabei in Toluol bei 23° bestimmt. Hierbei werden 250 mg der Polymerteilchen in 25 ml Toluol 24 Stunden unter Schütteln bei 23°C gequollen. Nach Zentrifugation mit 20000 Upm wird der unlösliche Anteil abgetrennt und getrocknet. Der Gelgehalt ergibt sich aus dem Quotienten des getrockneten Rückstandes und der Einwaage und wird in Gewichtsprozent angegeben.

Die erfindungsgemäß eingesetzten vernetzten ionogene Gruppen enthaltenden Polymerteilchen weisen weiterhin zweckmäßig in Toluol bei 23°C einen Quellungsindex von weniger als etwa 80, bevorzugter von weniger als 60, noch bevorzugter von weniger als 40 auf. So können die Quellungsindizes der Polymerteilchen (Qi) besonders bevorzugt zwischen 1-15 und 1-10 liegen. Der Quellungsindex wird aus dem Gewicht der in Toluol bei 23°C für 24 Stunden gequollenen lösungsmittelhaltigen Polymerteilchen (nach Zentrifugation mit 20000 Upm) und dem Gewicht der trockenen Polymerteilchen berechnet:

$$Qi = \text{Naßgewicht der Polymerteilchen / Trockengewicht der Polymerteilchen.}$$

Zur Ermittlung des Quellungsindex läßt man 250 mg der Polymerteilchen in 25 ml Toluol 24 h unter Schütteln quellen. Das Gel wird abzentrifugiert und gewogen und anschließend bei 70 °C bis zur Gewichtskonstanz getrocknet und nochmals gewogen.

Die erfindungsgemäß verwendeten ionogene Gruppen enthaltenden Polymerteilchen enthalten ionogene Gruppen, die ionisch sind oder zur Bildung ionischer Gruppen befähigt sind. Sie vermögen auf diese Weise protonenliefernd und/oder protonenakzeptierend zu sein.

Gemäß einer bevorzugten Ausführungsform sind die ionogenen Gruppen Säuregruppen. Gemäß einer besonders bevorzugten Ausführungsform werden die ionogenen Gruppen ausgewählt aus einer oder mehreren der folgenden funktionellen Gruppen: $-COOH$, $-SO_3H$, $-OSO_3H$, $-P(O)(OH)_2$, $-O-P(OH)_2$ und $-O-P(O)(OH)_2$ und/oder deren Salzen und/oder deren Derivate, wie insbesondere Partialester davon. Die Salze stellen die konjugierten Basen zu den sauren funktionellen Gruppen dar, also $-COO^-$, $-SO_3^-$, $-OSO_3^-$, $-P(O)_2(OH)^-$ oder $-P(O)_3^{3-}$, $-O-P(O)_2^{2-}$ und $-OP(O)_2(OH)^-$ oder $-OP(O)_3^{2-}$ in der Form ihrer Metall-, bevorzugt Alkalimetall- oder Ammoniumsalze.

Erfindungsgemäß besonders bevorzugte ionogene Gruppen im Sinne der Erfindung werden ausgewählt aus $-SO_3H$, $-PO(OH)_2$, $-O-P(O)(OH)_2$ und/oder deren Salzen und/oder deren Derivate, wie insbesondere Partialester davon.

Die ionogenen Gruppen können je nach Herstellungsweise oberflächenständig und/oder nicht-oberflächenständig sein.

Die ionogenen Gruppen können durch Einpolymerisation entsprechend funktionalisierter Monomere und/oder

durch Modifikation nach der Polymerisation in die Polymerteilchen eingebracht werden.

Funktionalisierte Monomere werden beispielsweise aus der Gruppe ausgewählt, die besteht aus: Acrylsäure, Methacrylsäure, Vinylbenzoesäure, Itaconsäure, Maleinsäure, Fumarsäure, Crotonsäure, Vinylsulfonsäure, Styrolsulfonsäure, Phosponsäure- oder Phosphorsäuregruppen-enthaltenden Monomeren mit polymerisierbaren C=C-Doppelbindungen, wie Vinylphosphonsäure, 2-Phosphonomethyl-acrylsäure und 2-Phosphonomethyl-acrylsäureamid, Phosphonsäure- oder Phosphorsäureester von hydroxyfunktionellen, polymerisierbare C=C-Doppelbindungen-aufweisenden Monomeren oder Salzen oder Derivaten davon.

Phosphorsäureester von hydroxyfunktionellen polymerisierbare C=C-Doppelbindungen-aufweisenden Monomeren weisen bevorzugt die folgenden Formeln (I) oder (II) der folgenden Methacrylat-Verbindungen auf:

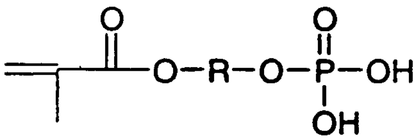

(I),

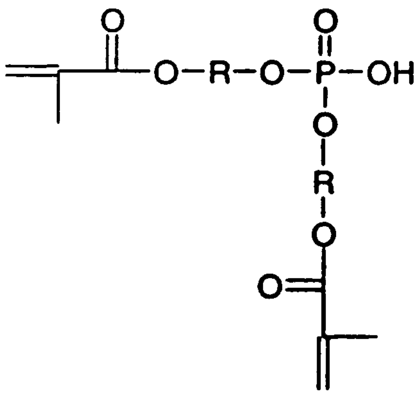

(II),

worin R eine zweiwertige organische Gruppe, wie insbesondere $C_{1-10}$-Alkylen ist. Bevorzugt ist R eine $C_{2-4}$-Alkylengruppe (d.h., eine $C_{2-4}$-Alkandiylgruppe), wie eine Ethylen- oder eine n-Propylengruppe. Auch Salze dieser Verbindungen sind anwendbar, wie insbesondere Alkalimetallsalze, bevorzugt das Natriumsalz oder Ammoniumsalze. Auch die entsprechenden Acrylate sind einsetzbar. Weiterhin können Partialester mit anderen gesättigten oder ungesättigten Carbonsäuren dieser Verbindungen verwendet werden. Der Begriff der Partialester schließt erfindungsgemäß sowohl den Fall ein, dass ein Teil der sauren Hydroxylgruppen der ionogenen Gruppe teilweise verestert ist, als auch den Fall, worin in den Polymerteilchen ein Teil der Hydroxylgruppen verestert ist, ein anderer Teil nicht verestert ist.

Der Anteil der einpolymerisierten ionogene Gruppen aufweisenden funktionellen Monomeren beträgt bevorzugt von 0,1 bis 100 Gew. %, bevorzugter 0,2 bis 99,5 Gew.-%, bezogen auf die Gesamtmenge der Monomere. Dies bedeutet, dass auch Homopolymere dieser ionogene Gruppen tragenden Monomere eingesetzt werden können. Beispielsweise können mindestens 10 Gew.-%, mindestens 20 Gew.-% oder mindestens 30 Gew.-% dieser Monomere vorliegen.

Die ionogenen Gruppen $-OSO_3H$ und $-OP(O)(OH)_2$ können beispielsweise auch durch Umsetzung von hydroxylmodifizierten Polymerteilchen (wie durch Einpolymerisation von Hydroxyalkyl(meth)acrylaten erhaltene) oder durch Addition von Schwefel- bzw. Phosphorsäure an epoxidhaltige (beispielsweise glycidylmethacrylathaltige) Polymerteilchen mit Schwefelsäure oder Phosphorsäure, durch Addition von Schwefelsäure oder Phosphorsäure an doppelbindungshaltige Polymerteilchen, durch Zersetzung von Persulfaten oder Perphosphaten in Gegenwart von doppelbindungshaltigen Polymerteilchen, sowie durch Umesterung nach der Polymerisation in die Polymerteilchen eingebracht werden. Weiterhin können die Gruppen $-SO_3H$ und $-P(O)(OH)_2$ auch durch Sulfonierung bzw. Phosphonierung von aromatischen Vinylpolymeren eingebracht werden.

Ionogene Gruppen können weiterhin auch durch Umsetzung hydroxylmodifizierter Polymerteilchen mit entsprechend funktionalisierten Epoxiden hergestellt werden.

Neben den genannten ionogenen Gruppen können weitere funktionelle Gruppen zur Steuerung der Eigenschaften insbesondere in die Oberfläche der Polymerteilchen eingebracht werden, wie durch chemische Umsetzung der bereits vernetzten Polymerteilchen mit gegenüber C=C-Doppelbindungen reaktiven Chemikalien. Diese reaktiven

Chemikalien sind insbesondere solche Verbindungen, mit deren Hilfe polare Gruppen wie z.B. Aldehyd-, Hydroxyl-, Carboxyl-, Nitril- etc. sowie schwefelhaltige Gruppen, wie z.B. Mercapto-, Dithiocarbamat-, Polysulfid-, Xanthogenat- und/oder Dithiophosphorsäuregruppen und/oder ungesättigte Dicarbonsäuregruppen an die Polymerteilchen chemisch gebunden werden können. Ziel der Modifizierung ist insbesondere die Verbesserung der Verträglichkeit mit einem Matrixpolymer bzw. einem Matrix-bildenden Polymermaterial, in das die protonenleitenden Polymerteilchen eingearbeitet werden, um beispielsweise eine gute Verteilbarkeit bei der Herstellung sowie eine gute Ankopplung zu erreichen.

Besonders bevorzugte Methoden der Modifizierung sind die Pfropfung der Polymerteilchen mit funktionellen Monomeren sowie die Umsetzung mit niedermolekularen Agentien. Auf diese Weise können gegebenenfalls auch die ionogenen, protonenspendenden oder protonenakzeptierenden Monomere in die Polymerteilchen eingebracht werden.

Für die Pfropfung der Polymerteilchen mit funktionellen Monomeren geht man zweckmäßigerweise von der wässrigen Mikrogeldispersion aus, die man mit polaren Monomeren wie Vinylsulfonsäure, Styrolsulfonsäure, Acrylsäure, Methacrylsäure, Itaconsäure, Hydroxyethyl(meth)acrylat (der Ausdruck "(Meth)acrylat" schließt in vorliegender Anmeldung sowohl Methacrylat als auch Acrylat ein), Hydroxypropyl(meth)acrylat, Hydroxybutyl(meth)acrylat, Acrylnitril, Acrylamid, Methacrylamid, Acrolein, Phosponsäure- oder Phosphorsäuregruppen-enthaltenden Monomeren mit polymerisierbaren C=C-Doppelbindungen, wie Vinylphosphonsäure, 2-Phosphonomethylacrylsäure und 2-Phosphonomethylacrylsäureamid, Phosphonsäure- oder Phosphorsäureester von hydroxyfunktionellen, polymerisierbare C=C-Doppelbindungen-aufweisenden Monomeren oder Salzen oder Derivaten, wie insbesondere Partialester davon unter den Bedingungen einer radikalischen Emulsionspolymerisation umsetzt. Auf diese Weise werden Polymerteilchen mit einer Kern/Schale-Morphologie erhalten. Es ist wünschenswert, daß das im Modifikationsschritt verwendete Monomer möglichst quantitativ auf das unmodifizierte Polymerteilchen bzw. Mikrogel aufpfropft. Zweckmäßigerweise werden die funktionellen Monomere vor der vollständigen Vernetzung der Mikrogele hinzudosiert. Auch eine Modifikation doppelbindungshaltiger Polymerteilchen, wie z.B. durch Ozonolyse kommt in Frage.

In einer bevorzugten Ausführungsform sind die Polymerteilchen, insbesondere die Mikrogele durch Hydroxyl-Gruppen insbesondere auch an der Oberfläche davon modifiziert. Der Hydroxylgruppengehalt der Polymerteilchen, insbesondere der Mikrogele wird durch Umsetzung mit Acetanhydrid und Titration der hierbei frei werdenden Essigsäure mit KOH nach DIN 53240 als Hydroxyl-Zahl mit der Dimension mg KOH/g Polymer bestimmt. Die Hydroxylzahl der Polymerteilchen, insbesondere der Mikrogele liegt bevorzugt zwischen 0,1-100, noch bevorzugter zwischen 0,5-50 mg KOH/g Polymer.

Die Menge des eingesetzten Modifizierungsmittels richtet sich nach dessen Wirksamkeit und den im Einzelfall gestellten Anforderungen und liegt im Bereich von 0,05 bis 30 Gewichtsprozent, bezogen auf die Gesamtmenge an eingesetzten Polymerteilchen, insbesondere Mikrogel, besonders bevorzugt sind 0,5-10 Gewichtsprozent bezogen auf Gesamtmenge an Polymerteilchen, insbesondere Mikrogel.

Die Modifizierungsreaktionen können bei Temperaturen von 0-180 °C, bevorzugt 20-95 °C, ggf. unter Druck von 1-30 bar, durchgeführt werden. Die Modifizierungen können an Kautschuk-Mikrogelen in Substanz oder in Form ihrer Dispersion vorgenommen werden, wobei beim letzten Fall inerte organische Lösungsmittel oder auch Wasser als Reaktionsmedium verwendet werden können. Besonders bevorzugt wird die Modifizierung in wäßriger Dispersion des vernetzten Kautschuks durchgeführt.

In den Polymermatrices, wie in der Form von Membranen, insbesondere Polymerelektrolytmembranen für Brennstoffzellen, können die erfindungsgemäß verwendeten ionogene Gruppen enthaltenden Teilchen in einem Anteil von Matrixpolymer zu ionogene Gruppen enthaltenden Teilchen von 1 : 99 bis 99 : 1, bevorzugt von 10 : 90 bis 90 : 10, besonders bevorzugt 20 : 80 bis 80 : 20 enthalten sein. Die Menge der erfindungsgemäß verwendeten ionogene Gruppen enthaltenden Teilchen hängt von den gewünschten Eigenschaften der Membran, wie beispielsweise Protonenleitfähigkeit der Membranen ab.

Gemäß einer bevorzugten Ausführungsform betrifft die vorliegende Erfindung eine Polymerelektrolytmembran für Brennstoffzellen, umfassend eine Polymermatrix, worin ionogene Gruppen enthaltende Polymerteilchen eingebettet sind, die einen mittleren Teilchendurchmesser im Bereich von 5 nm bis 500 nm (bestimmt mittels Ultrazentrifugation wie zuvor dargelegt) aufweisen, durch Emulsionspolymerisation hergestellt sind und ionogene Gruppen enthalten, die aus der Gruppe, bestehend aus: $-SO_3H$, $-OSO_3H$, $-P(O)(OH)_2$, $-O-P(OH)_2$ und $-O-P(O)(OH)_2$ und/oder deren Salze und/oder Derivate davon, ausgewählt sind. Bevorzugt sind $-SO_3H$, $-OSO_3H$, $-P(O)(OH)_2$, $-O-P(O)(OH)_2$ und/oder deren Salze und/oder deren Derivate, wie insbesondere Ester, wie Partialester.

Der Anteil der genannten ionogenen Gruppen in den ionogene Gruppen enthaltenden Polymerteilchen liegt bevorzugt im Bereich von 0,1 bis 95 Gew.-%, bevorzugter 1 bis 90 Gew.-%, bezogen auf die Gesamtmenge der Polymerteilchen.

Geeignete Salze der Polymerteilchen schließen Metall- oder Ammoniumsalze, insbesondere Alkalimetallsalze, Erdalkalimetallsalze etc. ein.

Geeignete Derivate der Polymerteilchen schließen insbesondere Ester- und Partialester der genannten ionogenen Gruppen ein.

Wenn die ionogene Gruppen enthaltenden Teilchen oligomerer Natur sind, weisen diese vorzugsweise keine

feste Phasengrenze mit der umgebenden Polymermatrix auf. Die Teilchengröße derartiger Oligomere, die auch als Sternoligomere bezeichnet werden können, liegt vorzugsweise in einem Bereich von etwa 2 nm bis etwa 10 nm. Diese ionogene Gruppen enthaltenden Oligomerteilchen werden vorzugsweise durch Polymerisation bzw. Copolymerisation in Lösung oder in Substanz hergestellt.

Unabhängig davon, ob die ionogene Gruppen enthaltenden Teilchen polymerer oder oligomerer Natur sind, können die ionogenen Gruppen, insbesondere Säuregruppen, entweder an der Oberfläche, d.h. im Sinne einer Kern-Schaleartigen Struktur, oder im gesamten Teilchen vorliegen.

Die ionogene Gruppen enthaltenden Teilchen weisen vorzugsweise eine im wesentlichen kugelförmige (Mikrogel) oder im wesentlichen sternförmige Form auf, müssen jedoch nicht notwendigerweise eine feste Phasengrenze mit der umgebenden Polymermatrix aufweisen. Es ist somit auch möglich, daß die ionogene Gruppen enthaltenden Teilchen eine von einer im wesentlichen kugelförmigen oder im wesentlichen sternförmigen Form abweichende Form aufweisen. Nach einer bevorzugten Ausführungsform sind die ionogene Gruppen enthaltenden Teilchen Feststoffteilchen, die vorzugsweise eine Teilchengrösse im Nanometerbereich aufweisen.

Die Art der Herstellung der ionogene Gruppen enthaltenden Teilchen unterliegt keiner besonderen Beschränkung. Die ionogene Gruppen enthaltenden Teilchen können beispielsweise durch Polymerisation bzw. Copolymerisation in Lösung oder in Substanz, durch Emulsionspolymerisation oder durch Suspensionspolymerisation hergestellt werden. Die ionogene Gruppen enthaltenden Teilchen werden jedoch vorzugsweise durch Emulsionspolymerisation hergestellt, insbesondere wenn ionogene Gruppen enthaltende Polymerteilchen gewünscht sind.

Die Polymermatrix umfaßt mindestens ein basisches Polymer. Gegebenenfalls können übliche Hilfsstoffe in die Polymermatrix eingebettet werden. Ferner kann auch mindestens ein nicht basisches Polymer in die Polymermatrix eingebaut werden, um beispielsweise die thermischen oder mechanischen Eigenschaften zu beeinflussen, wenn dies gewünscht ist.

Geeignete Dotierungsmittel für die erfindungsgemäße Polymerelektrolytmembran, die die Polymermatrix enthält, sind einem Fachmann bekannt. Beispielhaft können Phosphorsäure, Phosphorsäurederivate, Phosphonsäure, Phosphonsäurederivate, Schwefelsäure, Schwefelsäurederivate, Sulfonsäure oder Sulfonsäurederivate genannt werden. Weiterhin sind Dotierungsmittel bevorzugt, die das Reaktionsprodukt von einer mindestens zweibasigen, anorganischen Säure mit einer organischen Verbindung sind, wobei das Reaktionsprodukt eine nicht umgesetzte, acide Gruppe aufweist. Der Dotierungsgrad beträgt bevorzugt zwischen 60 und 95%, besonders bevorzugt zwischen 65 and 90%, bezogen auf die Masse der undotierten Polymermatrix.

Als Hilfsstoffe können übliche, in Membranen für Brennstoffzellen verwendete Additive verwendet werden. Ein Fachmann auf dem einschlägigen Fachgebiet ist in der Lage geeignete Hilfsstoffe auszuwählen.

Die basischen Polymere sind vorzugsweise aus der Gruppe, umfassend Polybenzimidazol, Polypyridin, Polypyrimidin, Polyimidazole, Polybenzthiazole, Polybenzoxazole, Polyoxadiazole, Polychinoxaline, Polythiadiazole, Poly (tetrazapyrene) oder eine Kombination von zwei oder mehreren davon, ausgewählt, wobei Polybenzimidazol besonders bevorzugt ist. Ferner können jedoch auch andere Polymere in die Polymermatrix eingearbeitet werden, um die mechanischen oder thermischen Eigenschaften zu modifizieren.

Die erfindungsgemäße Polymerelektrolytmembran stellt in Anwesenheit von Wasser eine ausgezeichnete Protonenleitfähigkeit bereit und liefert aber auch in wasserfreiem Zustand technisch relvante Leitfähigkeit.

Gemäß einer bevorzugten Ausführungsform weist die erfindungsgemäße Polymerelektrolytmembran eine Leitfähigkeit von mindestens 2,5 S/m bei einer Temperatur von 25°C auf, wobei eine Leitfähigkeit von mindestens 3,1 S/m bei einer Temperatur von 25°C besonders bevorzugt ist.

Ferner wird ein Verfahren zur Herstellung einer Polymerelektrolytmembran für Brennstoffzellen, insbesondere gemäß der vorliegenden Erfindung und den hier beschriebenen bevorzugten Ausführungsformen, bereitgestellt, umfassend die Schritte:

(a) Herstellen einer Membrangießlösung, mindestens umfassend ein Lösungsmittel, ein Matrix-bildendes basisches Polymer, und ionogene Gruppen enthaltende Teilchen, wie vorstehend beschrieben,
(b) Gießen der Membrangießlösung in Membranform und
(c) Entfernen des Lösungsmittels.

Die ionogene Gruppen enthaltenden Teilchen werden erfindungsgemäß gemäß Schritt a) in einer Lösung des Matrix-bildenden basischen Polymers dispergiert. Eine optimale Dispergierung bzw. Homogenisierung der ionogene Gruppen enthaltenden Teilchen in einer Lösung des basischen Polymers ist besonders bevorzugt gemäß WO 2005033186 A1 und WO 2005030843 A1 möglich und stellt sicher, daß die ionogene Gruppen enthaltenden Teilchen nach Schritt c) sich erfindungsgemäß nicht untereinander in der Polymermatrix berühren.

In einem weiteren Schritt d) kann die Membran nach Schritt c) mit mindestens einem Dotierungsmittel beladen werden.

Das Lösungsmittel unterliegt keiner wesentlichen Beschränkung, solange das Matrix-bildende basische Polymer und/oder die ionogene Gruppen enthaltenden Teilchen gelöst oder in geeigneter Weise dispergiert werden können, um die Bildung der gewünschten Membran zu ermöglichen. Das Lösungsmittel wird jedoch vorzugsweise aus der Gruppe, umfassend N-Methylpyrrolidon (NMP), Dimethylformamid (DMF), Dimethylsulfoxid (DMSO), Dimethylacetamid (DMAc) und Gemischen davon, ausgewählt.

Das Entfernen des Lösungsmittels wird durch übliche Mittel durchgeführt, wobei ein Entfernen durch Erwärmen der ausgegossenen Membrangießlösung und/oder durch Anlegen eines Vakuums bevorzugt ist.

Darüber hinaus wird die Verwendung der vorstehend definierten Polymerelektrolytmembran oder der gemäß dem vorstehenden Verfahren erhältlichen Polymerelektrolytmembran in Brennstoffzellen, vorzugsweise in Hochtemperaturbrennstoffzellen in einem Temperaturbereich bis etwa 200°C, bereitgestellt.

Die erfindungsgemäße Polymerelektrolytmembran kann in Brennstoffzellen, wie Hochtemperaturbrennstoffzellen in einem Temperaturbereich bis etwa 200°C, über einen langen Zeitraum eine ausgezeichnete Protonenleitfähigkeit bereitstellen.

Die nachfolgenden Beispiele werden angegeben, um die vorliegende Erfindung weiter zu erläutern, ohne dadurch den Schutzumfang des in der vorliegenden Erfindung beanspruchten Gegenstands zu beschränken.

## Beispiele

### Beispiel 1

Herstellunpsbeispiele für Mikrogele bzw. im wesentlichen kugelförmige ionogene Gruppen enthaltende Polymerteilchen.

Nachfolgend wird die Herstellung von Mikrogelen beschrieben, die als ionogene Gruppen enthaltende Teilchen zur Herstellung der erfindungsgemäßen Polymerelektrolytmembran für Brennstoffzellen verwendet werden können.

Die Mikrogele wurden durch Emulsionspolymerisation hergestellt. Die für die Herstellung der Mikrogele verwendeten Monomerkombinationen sowie wesentliche Rezepturbestandteile sind in den Tabellen 1) und 2) zusammengefasst. Sämtliche Rezepturbestandteile werden auf 100 Gew.-Teile der Monomermischung bezogen.

In Tabelle 1) sind die Versuche zusammengefasst, bei denen als Emulgator Mersolat® H95 der Lanxess Deutschland GmbH verwendet wurde. Mersolat® H95 ist das Natriumsalz einer Mischung langkettiger (C16-C18) Alkylsulfonate.

In Tabelle 2) sind die Versuche zusammengefasst, bei denen als Emulgator eine Mischung aus disproportionierter Harzsäure (Dresinate® 731/70%ig von Abieta) und Fettsäure (Edenor® HTICI N der Firma Oleo Chemicals / 12%ig in Wasser) verwendet wurde. Bei diesen Versuchen wurde außerdem 0,6 Gew.-Teile Kaliumhydroxid zugesetzt (Tabelle 2)). Durch die Kaliumhydroxidmenge wurde die Mischung an Harz- und Fettsäure formal zu 150 % neutralisiert.

Für die Herstellung der in den Tabellen 1) und 2) aufgeführten Mikrogele wurden folgende Monomeren verwendet:

Styrol (98%ig) von KMF Labor Chemie Handels GmbH

Butadien (99%ig, entstabilisiert) der Lanxess Deutschland GmbH Trimethylolpropantrimethacrylat (90%ig) von Aldrich; Produktnummer: 24684-0 (Abkürzung: TMPTMA)

Hydroxyethylmethacrylat (96%) von Acros; Produktnummer: 156330010 (Abkürzung: HEMA)

Na-Vinylsulfonat; 30%ige wässrige Lösung von Fluka; Produktnummer: 95061 (Abkürzung: NaVS)

Na-Styrolsulfonat (90%) von Fluka; Produktnummer: 94904 (Abkürzung: NaSS)

Vinylphosphonsäure (95%) von Fluka, Produktnummer: 95014 (Abkürzung: $H_2VP$)

2-(Methacryloyloxy)ethylphosphat von Aldrich, Produktnummer: 463337 (Abkürzung: $H_2MOOEP$)

**Tabelle 1) Mikrogelrezepturen auf Basis des Emulgators Mersolat® H95**

| Mikrogelbezeichnung | Styrol [Gew.-Teile] | Butadien [Gew.-Teile] | TMPTMA [Gew.-Teile] | NaVS [Gew.-Teile] | $Na_2VP$ 1) [Gew.-Teile] | NaSS [Gew.-Teile] | $H_2MOOEP$ 2) [Gew.-Teile] | Mersolat® H95 3) [Gew.-Teile] | Wasser-Menge 4) [Gew.-Teile] |
|---|---|---|---|---|---|---|---|---|---|
| OBR 1290-2 | 88,5 | - | 1,5 | 10 | - | - | - | 0,7 | 400 |
| OBR 1290-4 | 88,5 | - | 1,5 | 10 | - | - | - | 4,0 | 400 |
| OBR 1293-1 | 84 | - | 6 | 10 | - | - | - | 2,5 | 400 |
| OBR 1291-1 | 84 | - | 6 | 10 | - | - | - | 1,5 | 400 |
| OBR 1297-1 | 88,5 | - | 1,5 | - | 10 | - | - | 2,5 | 400 |
| OBR 1294-1 | 93,5 | - | 1,5 | - | - | 5 | - | 2,5 | 400 |
| OBR 1361-B | - | 84 | 6 | 10 | - | - | - | 2,5 | 400 |
| OBR 1438-1 | 86,9 | - | 5 | - | - | - | 8,1 | 2,5 | 400 |

1) $Na_2VP$ wurde aus $H_2VP$ durch in-situ Neutralisation mit 2 equ. NaOH erhalten. Die Gewichtsangabe bezieht sich auf das Natriumsalz der Vinylphosphonsäure ($Na_2VP$)
2) Die Gewichtsangabe 2-(Methacryloyloxy)ethylphosphat bezieht sich auf die freie Säure ($H_2MOOEP$); vor der Initiierung der Polymerisation wurde $H_2MOOEP$ durch Zugabe von 2 equ. KOH neutralisiert, so dass im Reaktionsansatz das entsprechende Dikaliumsalz vorlag ($K_2MOOEP$)
3) Die Mengenangabe bezieht sich auf die Gesamtmenge an Mersolat® H95 im Reaktionsansatz
4) 4) Die Mengenangabe bezieht sich auf die Gesamtmenge an Wasser im Reaktionsansatz

**Tabelle 2) Mikrogelrezepturen auf Basis eines Emulgatorsystems aus Harzsäure/Fettsäure**

| Mikrogelbezeichnung | Styrol [Gew.-Teile] | Butadien [Gew.-Teile] | TMPTMA [Gew.-Teile] | HEMA [Gew.-Teile] | Dresinate® 731* [Gew.-Teile] | Edenor HTiCT N* [Gew.-Teile] | KOH [Gew.-Teile] | Gesamt-Wassermenge [Gew.-Teile] |
|---|---|---|---|---|---|---|---|---|
| OBR 1435-4 | 91 | - | 1,5 | 7,5 | 4,0 | 1,0 | 0,6 | 230 |
| OBR 1327 B | 67 | 22,5 | 3 | 7,5 | 4,0 | 1,0 | 0,6 | 400 |
| OBR 1330 I | 81,5 | 11,5 | 4 | 3,0 | 4,0 | 1,0 | 0,6 | 400 |

* Mengenangabe für 100%iges Material
Dresinate®: disproportionierte Harzsäure (Dresinate® 731/70%ig der Firma Abieta)
Edenor® HTiCT N: disproportionierte Fettsäure der Firma Oleo Chemicals (12%ig in Wasser)

Die Produkte OBR 1290-2, OBR 1290-4, OBR 1293-1, OBR 1291-1, OBR 1297-1, OBR 1294-1 und OBR 1438-1 (Tabelle 1)) wurden in einem 6l-Glasreaktor mit Rührwerk hergestellt, während die Produkte OBR 1361-B, OBR 1435-4, OBR 1327 B und OBR 1330 I (Tabelle 1) und Tabelle 2)) in einem 20-I-Stahlautoklaven mit Rührwerk hergestellt wurden.

Bei der Durchführung der Emulsionspolymerisationen im Glasreaktor wurden jeweils 3,93 kg Wasser vorgelegt und mit einem Stickstoffstrom gespült. In die Wasservorlage wurde ein Teil der gesamten Mersolatmenge zugegeben und gelöst. Bei der Herstellung von OBR 1290-2 wurden 5,3 g Mersolat® H95; bei OBR 1291-1 13,7 g Mersolat® H95; bei OBR 1293-1, OBR 1297-1, OBR 1294-1, OBR 1361-B und OBR 1438-1 wurden 24,2 g Mersolat® H95 sowie bei OBR 1290-4 wurden 40,0 g Mersolat® H95 in das Wasser gegeben und gelöst. Danach wurden 1000 g der in Tabelle 1) aufgeführten Monomermischungen zusammen mit 0,08 g 4-Methoxyphenol (Arcos Organics, Artikel-Nr. 126001000, 99 %) in das Reaktionsgefäß gegeben. Nach Aufheizung der Reaktionsmischung auf 30-40°C wurde eine frisch hergestellte 4%ige wässrige Prämixlösung zugegeben. Diese Prämixlösung bestand aus:

0,169 g Ethylendiamintetraessigsäure (Fluka, Artikelnummer 03620),
0,135 g Eisen(II)-sulfat-7$H_2O$ (Riedel de Haen, Artikelnummer. 12354), (ohne Kristallwasser berechnet)
0,347 g Rongalit C, Na-Formaldehydsulfoxylat-2-hydrat (Merck-Schuchardt, Artikelnummer 8.06455) (ohne Kristallwasser berechnet) sowie
0,524 g Trinatriumphosphat-12$H_2O$ (Acros, Artikelnummer 206520010) (ohne Kristallwasser berechnet) zudosiert.

Für die Aktivierung der Polymerisation wurde eine Aktivatorlösung aus 0,56 g p-Menthanhydroperoxid (Trigonox® NT 50 der Akzo-Degussa) in 50 g Wasser und der Restmenge an Mersolat® H95 (2,1 g) hergestellt.

Die Hälfte der wässrigen Aktivatorlösung wurde 5 Min. nach Zusatz der Prämixlösung in das Reaktionsgefäß gegeben. Hierdurch wurde die Polymerisation gestartet. Nach 2,5 Stunden Reaktionszeit wurde die Reaktionstemperatur auf 40-50 °C erhöht. Nach einer weiteren Stunde wurde die zweite Hälfte der wässrigen Aktivatorlösung zugesetzt. Bei Erreichen eines Polymerisationsumsatzes >90 % (üblicherweise: 95% - 100%) wurde die Polymerisation durch Zugabe einer wässrigen Lösung von 2,35 g Diethylhydroxylamin (DEHA, Aldrich, Artikelnummer 03620) abgestoppt.

Die Herstellung von OBR 1361-B, OBR 1327 B und OBR 1330 I wurde in analoger Weise in einem 20 Liter-Autoklaven mit Rührwerk durchgeführt. Bei den Autoklavenansätzen wurden jeweils 3,5 kg der Monomermischung und eine Gesamtwassermenge von 14 kg verwendet. Die weitere Durchführung der Versuche erfolgte in analoger Weise wie bei den im Glasreaktor durchgeführten Versuchen beschrieben.

Nach dem Abstoppen der Polymerisationsreaktionen wurden nicht umgesetzte Monomere und flüchtige Bestandteile durch Strippen mit Wasserdampf aus dem Latex entfernt.

Die Latices der Tabellen 1) und 2) wurden filtriert und wie im Beispiel 2 der US 6,399,706 mit Stabilisator versetzt, koaguliert und getrocknet.

Die Gele wurden sowohl im Latexzustand mittels Ultrazentrifugation (UZ) und durch dynamische Lichtstreuung (DLS) bezüglich Teilchendurchmesser sowie als Feststoff bezüglich der Löslichkeit in Toluol (Gelgehalt, Quellungsindex / QI) und mittels DSC (Glasübergangstemperatur/Tg und Breite der Tg-Stufe) charakterisiert.

Charakteristische Daten der in den Tabellen 1) und 2) beschriebenen Mikrogele sind in Tabelle 3) zusammengestellt.

**Tabelle 3) Charakteristische Daten der Mikrogele (aus den Tabellen 1) und 2))**

| Mikrogelbezeichnung | Durchmesserangaben | | | | Gelgehalt | Quellungsindex | Tg | ΔTg |
|---|---|---|---|---|---|---|---|---|
| | $d_{10}$ [nm] | $d_{50}$ [nm] | $d_{80}$ [nm] | $d_{DLS}$ [nm] | [Gew.%] | | [°C] | [°C] |
| OBR 1290-2 | 154,9 | 195,8 | 240,2 | - | 99,9 | 5,9 | 112 | 6,4 |
| OBR 1290-4 | - | - | - | 35 | 82,5 | 9,8 | 111 | 7,6 |
| OBR 1293-1 | 27,5 | 39,2 | 47,2 | - | 99,9 | 8,2 | 124,5 | 12,2 |
| OBR 1291-1 | - | - | - | 155 | 99,1 | 4,0 | 120 | 14,2 |
| OBR 1297-1 | - | - | - | 171 | 100,0 | 6,5 | 112 | 6,0 |
| OBR 1294-1 | 63,1 | 78,7 | 88,1 | - | 99,6 | 9,2 | 112 | 8,0 |
| OBR 1361-B | - | - | - | 137 | 95,6 | 5,1 | -78 | 10,4 |
| OBR 1435-4 | - | - | - | 48,3 | 93,1 | 9,4 | 103,5 | 9,8 |
| OBR 1327 B | 30,7 | 40,3 | 46,1 | - | 94,2 | 6,4 | 36 | 21,8 |

(fortgesetzt)

| Mikrogelbezeichnung | Durchmesserangaben | | | | Gelgehalt | Quellungsindex | Tg | $\Delta$Tg |
|---|---|---|---|---|---|---|---|---|
| | $d_{10}$ [nm] | $d_{50}$ [nm] | $d_{80}$ [nm] | $d_{DLS}$ [nm] | [Gew.%] | | [°C] | [°C] |
| OBR 1330 I | 35,1 | 47,6 | 53,3 | - | 91,2 | 11,3 | 62 | 20 |
| OBR 1438-1 | - | - | - | 250 | 99,9 | 5,4 | 116 | 15,6 |

In Tabelle 3) bedeuten:

$d_{10}$, $d_{50}$ und $d_{80}$: Die Teilchendurchmesser wurden am abgestoppten und mit Wasserdampf gestrippten Latex mittels Ultrazentrifugation bestimmt (W. Scholtan, H. Lange, "Bestimmung der Teilchengrößenverteilung von Latices mit der Ultrazentrifuge", Kolloid-Zeitschrift und Zeitschrift für Polymere (1972) Band 250, Heft, 8). Die Latices haben eine charakteristische Teilchengrößenverteilung die durch die Durchmesserangaben $d_{10}$, $d_{50}$ und $d_{80}$ beschrieben wird. Diese Durchmesserangaben bedeuten, dass jeweils 10 Gew. % ($d_{10}$), 50 Gew.-% (dso) und 80 Gew.-% ($d_{80}$) der Teilchen einen Durchmesser besitzen, der kleiner als der angegebene Zahlenwert ist. Die Teilchengröße der Mikrogele im Latex und in den aus dem Latex isolierten Festprodukten wie sie in den erfindungsgemäßen Zusammensetzungen eingesetzt werden, sind praktisch identisch.

$d_{dls}$: am Latex bestimmter Teilchendurchmesser, der mittels dynamischer Lichtstreuung (DLS) erhalten wurde. Für die Bestimmung wurde ein Zetasizer® Nano Instrument (Modellnummer: Nano ZS) von Malvern Instruments Ltd., Worcestershire, England verwendet. Mittels dynamischer Lichtstreuung wird ein mittlerer Teilchendurchmesser erhalten.

Tg: Glasübergangstemperatur

$\Delta$Tg: Breite der Tg-Stufe

Für die Bestimmung von Tg und $\Delta$Tg wurde das Gerät DSC-2 von Perkin-Elmer benutzt. Im ersten Messzyklus wird die Probe mit flüssigem Stickstoff rasch auf -130°C abgekühlt und mit einer Heizrate von 20 K/min. auf 150°C aufgeheizt. Im zweiten Messzyklus wird wiederum auf -130°C gekühlt und mit 20 K/min. aufgeheizt. Tg und $\Delta$Tg werden im 2. Messzyklus bestimmt.

Die Mikrogele werden durch den unlöslichen Anteil und durch den Quellungsgrad des unlöslichen Anteils charakterisiert. Den unlöslichen Anteil und den Quellungsgrad bestimmt man in Toluol. Hierzu werden 250 mg des Mikrogels in 25 ml Toluol 24 Stunden unter Schütteln bei 23°C gequollen. Nach Zentrifigation mit 20 000 Upm wird der unlösliche Anteil abgetrennt und getrocknet. Der Gelgehalt ergibt sich aus dem Quotienten der Masse des bei 70°C bis zur Gewichtskonstanz getrockneten Rückstandes und der Einwaage und wird in Gewichtsprozent angegeben.

QI: Quellungsindex ist definiert als Naßgewicht des Mikrogels /Trockengewicht des Mikrogels.

Der Quellungsindex wird aus dem Gewicht des in Toluol bei 23°C für 24 Stunden gequollenen lösungsmittelhaltigen Mikrogels ($MG_{naß}$) (nach Zentrifugation mit 20 000 Upm) und dem Gewicht des trockenen Mikrogels ($MG_{trocken}$) berechnet:

$$QI = MG_{naß} \; / \; MG_{trocken}$$

Der Gelgehalt wird als prozentualer Anteil des in Toluol unlöslichen Mikrogelanteils ($MG_{trocken}$) bezogen auf die Mikrogeleinwaage (250 mg) berechnet:

$$\text{Gelgehalt [\%]} = 100 \times \frac{MG_{trocken}}{250}$$

**Beispiel 2**

Mikrogeldispersionen zur Herstellung von Polymermembranen für Brennstoffzellen:

Verschiedene säuregruppentragende Mikrogele werden in einer Lösung aus 16 Gew% Polybenzimidazol (PBI, Produkt der Firma Sartorius AG) und 84 Gew% Dimethylacetamid (DMAc, 99 %, Firma Aldrich) (Tabelle 4), PBI-Lösung (16 %)) dispergiert.

In der Tabelle 4) ist die Zusammensetzung der Dispersion angegeben:

**Tabelle 4) Zusammensetzung der Dispersion aus Mikrogel, PBI und Lösungsmittel**

| Material | Gew.-% | Rezeptur in g |
|---|---|---|
| PBI-Lösung (16%) | 33,33 | 200 |
| DMAc | 54,17 | 325 |
| Mikrogel (OBR 1294-1, OBR 1297-1 oder OBR 1290-4 nach Tabelle 5)) | 12,5 | 75 |
| Summe | 100 | 600 |

Für die Herstellung der in den Tabellen 5) und 6) aufgeführten Mikrogele OBR 1294-1, OBR 1297-1 und 1290-4 wurden die folgenden Edukte in folgenden Gewichtsanteilen verwendet. Die Herstellung der Mikrogele erfolgt wie vorstehend in Beispiel 1 beschrieben.

**Tabelle 5) Rezepturen zur Herstellung der Mikrogele OBR 1294-1 und OBR 1297-1, OBR 1290-4**

| Mikrogel | Styrol | TMPTMA | NaSS | NaVS | $Na_2VP$ |
|---|---|---|---|---|---|
| OBR | [Gew. %] | [Gew. %] | [Gew. %] | [Gew. %] | [Gew. %] |
| 1294-1 | 93,5 | 1,5 | 5 | - | - |
| 1297-1 | 88,5 | 1,5 | - | - | 10 |
| 1290-4 | 88,5 | 1,5 | - | 10 | - |

Erläuterungen:
Styrol: (98%ig) von KMF Labor HandelsGmbH,
TMPTMA: Trimethylolpropantrimethacrylat (90%ig) von Aldrich; Produktnummer: 24684-0,
NaSS: Natrium-Styrolsulfonat (90%) von Fluka; Produktnummer: 94904,
NaVS: Natrium-Vinylsulfonat, 30%ige wässrige Lösung von Fluka; Produktnummer: 95061,
$Na_2VP$: Natriumsalz von Vinylphosphonsäure $H_2VP$ (95%) von Fluka;
Produktnummer: 95014. $Na_2VP$ wird aus $H_2VP$ durch in-situ-Neutralisation mit 2 Äquivalenten NaOH erhalten.

Die charakteristischen Daten der Gele sind in der Tabelle 6) zusammengefasst.

**Tabelle 6) Eigenschaften von OBR 1294-1, OBR 1297-1 und OBR 1290-4**

| Mikrogel | Analytische Daten | | | | |
|---|---|---|---|---|---|
| | $T_g$/°C | Gelgehalt / Gew% | QI | Breite $\Delta T_g$ / °C | Schwefel- bzw. Phosphorgehalt / % |
| OBR 1294-1 | 112 | 99,6 | 9,2 | 8,0 | 0,70 % S |
| OBR 1297-1 | 112 | 100 | 6,5 | 6,0 | 0,24 % P |
| OBR 1290-4 | 111 | 82,5 | 9,8 | 7,6 | 0,30 % S |

Erläuterungen:
$T_g$ = Glasübergangstemperatur
QI = Quellungsindex

Für die Herstellung der erfindungsgemäßen Mikrogeldispersionen nach Tabelle 4) werden 200 g der 16 gewichtsprozentigen PBI-Lösung vorgelegt und 75 g (entsprechend 12,5 Gew% nach Tabelle 4) Mikrogel unter Rühren mittels Propellerrührer zugegeben. Ein Teil der 325 g Dimethylacetamid nach Tabelle 4) wird ergänzt, soweit es die Viskosität des Propellerrührprozesses erfordert.

Danach wird die restliche Menge der 325 g Dimethylacetamid zugegeben. Die Mischung wird 24 h bei Raumtemperatur stehen gelassen und dann mit einem Hochdruckhomogenisator (Typ APV 1000 oder APV 2000 der APV Deutschland GmbH (invensys)) weiterverarbeitet. Das Gemisch gemäß Tabelle 4) wird bei Raumtemperatur dem Homogenisator zugeführt und bei 900 bis 1000 bar sechsmal durch den Homogenisator gegeben. Für die Förderung des Gemisches durch den Homogenisator sind bis zu 5 bar nötig. Die Verarbeitungstemperatur liegt zwischen 40 °C und 70 °C.

**Beispiel 3**

Herstellung einer Membrangießlösung mit Mikrogel 1297-1

50 g einer Dispersion aus Mikrogel 1297-1, PBI und Dimethylacetamid gemäß Tabelle 4) werden in 310 g einer 19,1-gewichtsprozentigen PBI-Lösung in DMAc unter Rühren eingetragen. Durch Zugabe von 55 g Dimethylacetamid (DMAc) wird der PBI-Feststoffgehalt in der Lösung auf 15 Gewichtsprozent erniedrigt. Die Lösung wird bei Raumtemperatur 0,5 bis 1 h mittels einer PTFE-Halbmondrührwelle durchmischt. Anschließend wird 1 h bei Raumtemperatur und bei 30 mbar entgast. Tabelle 7) enthält die Zusammensetzungen der für die Membranherstellung verwendeten alternativen Gießlösungen.

**Tabelle 7) Gießlösungskomponenten für die Membranherstellung**

| Mirkrogel-Typ | Menge Mikrogel -dispersion | Menge PBI-Lösung in DMAc | Feststoffgehalt PBI in DMAc -Lösung | Menge des optional zugesetzten DMAc |
|---|---|---|---|---|
| 1290-4 | 50 g | 300 g | 19,2 % | 60 g |
| 1297-1 | 50 g | 310 g | 19,1 % | 55 g |
| 1297-1 | 150 g | 250 g | 19,1 % | - |
| 1297-1 | 150 g | 150 g | 19,1 % | - |
| 1294-1 | 40 g | 280 g | 16,8 % | 30 g |
| 1294-1 | 65 g | 220 g | 16,8 % | 6 g |
| 1294-1 | 120 g | 260 g | 16,8 % | - |
| 1294-1 | 140 g | 160 g | 16,8 % | - |

Tabelle 8) enthält die physikalischen Eigenschaften der nach Beispiel 3 und Tabelle 7) hergestellten Gießlösungen:

**Tabelle 8) Physikalische Eigenschaften der Gießlösungen**

| Mikrogel-Typ | Mikrogelanteil* | Viskosität (Raumtemperatur) | PBI-Gehalt | Naßschichtdicke |
|---|---|---|---|---|
| 1290-4 | 10 % | 3300 mPas | 15,0 % | 300 μm |
| 1297-1 | 10% | 5000 mPas | 15,0% | 300 μm |
| 1297-1 | 30 % | 7900 mPas | 14,0 % | 300 μm |
| 1297-1 | 50 % | 6800 mPas | 12,5 % | 300 μm |
| 1294-1 | 10 % | 10400 mPas | 14,5% | 340 μm |
| 1294-1 | 20 % | 13800 mPas | 14,5 % | 340 μm |
| 1294-1 | 30 % | 13400 mPas | 14,0 % | 340 μm |

(fortgesetzt)

| Mikrogel-Typ | Mikrogelanteil* | Viskosität (Raumtemperatur) | PBI-Gehalt | Naßschichtdicke |
|---|---|---|---|---|
| 1294-1 | 50 % | 10800 mPas | 12,6 % | 340 μm |
| *Mikrogelgehalt in Gew % bezogen auf den Polybenzimidazolgehalt in % nach Tabelle 8). Ein Mikrogelanteil von 10 % entspricht bei einem PBI-Gehalt an 15,0 % einem Massenanteil von 1,5 % Mikrogel in der Gießlösung. | | | | |

**Beispiel 4**

Herstellung erfindungsgemäßer Polymermembranen mit ionogene Gruppen enthaltenden Polymerteilchen

Die entsprechend Beispiel 3 und Tabelle 7) hergestellten Gießlösungen werden auf einer Technikumsziehmaschine mit Schichtdicken zwischen 300 und 340 μm auf einer Polyesterfolie aufgetragen und bei 65 °C getrocknet. Die Membran wird von der Trägerfolie abgelöst und anschließend für 4 h bei 250 °C nachgetrocknet. Die Polymermembran, die keine Mikrogele als Vorläufer für ionogene Gruppen enthaltende Polymerteilchen enthält, wurde als Vergleichsbeispiel nach dem gleichen Verfahren hergestellt.

**Beispiel 5**

Zugspannungsmessungen

Zur Beurteilung der mechanischen Stabilität der Polymermembranen werden Zug-Spannungsmessungen durchgeführt. Membranproben mit einer Länge von 10 cm und einer Breite von 2 cm werden in eine Meßapparatur Z 2.5 der Firma Zwick GmbH & Co. eingespannt und bei Raumtemperatur und einer Geschwindigkeit von 5 mm/min einem Zugspannungstest unterzogen. Eine nach Beispiel 4 hergestellte undotierte Polymermembran (10 % OBR 1294-1*) hat ein E-Modul von ca. 4700 N/mm$^2$ und höher und reißt im Vergleich zur reinen PBI-Polymermembran ohne ionogene Gruppen enthaltende Polymerteilchen bei Zugspannungen von 125 N/mm$^2$ und einer Dehnung von 4 bis 5 %. Die Ergebnisse sind in Tabelle 9) zusammengefasst.

**Tabelle 9) Zug-Spannungsmessungen an Polymermembranen**

| | Max. Zugspannung | Dehnung | E-Modul |
|---|---|---|---|
| PBI ohne Mikrogel | 142 N / mm$^2$ | 5 % | 5500 N / mm$^2$ |
| 10 % OBR 1294-1* | 125 N / mm$^2$ | 5 % | 4700 N / mm$^2$ |
| 20 % OBR 1294-1* | 117 N/ mm$^2$ | 4 % | 4700 N / mm$^2$ |
| 30 % OBR 1294-1* | 113 N / mm$^2$ | 4 % | 4700 N/ mm$^2$ |
| 50 % OBR 1294-1* | 65 N / mm$^2$ | 2 % | 4000 N / mm$^2$ |
| *Mikrogelgehalt in Gew % bezogen auf den Polybenzimidazolgehalt in % nach Tabelle 8) | | | |

**Beispiel 6**

Dotierung mit Phosphorsäure

Zur Beurteilung des Aufnahmevermögens für das Dotierungsmittel werden Membranproben der Größe 11,8 cm x 13,5 cm in 85 gewichtsprozentige Phosphorsäure bei 130 °C für 30 min eingelegt und nach dem Abwischen der anhaftenden Phosphorsäure wird die Massenzunahme gravimetrisch entsprechend der nachfolgenden Formel bestimmt (vgl. Tabelle 10).

$$(\text{Masse dotiert} - \text{Masse vorher}) / \text{Masse dotiert} \times 100 = \text{Dotierungsgrad } [\%]$$

**Beispiel 7**

Messung der Protonenleitfähigkeit

Zur Beurteilung der Protonenleitfähigkeit werden dotierte und undotierte Polymermembranen in Stücke von 4,5 cm x 2 cm geschnitten, die mittlere Dicke durch Messung an mindestens 3 Punkten bestimmt und in eine Messzelle eingebaut. Die Messzelle besteht aus 4 Elektroden und die Bestimmung des Widerstandes wird bei Raumtemperatur und unter Ausschluss der Umgebungsfeuchte mittels Impedanzspektroskopie durchgeführt. Im Vergleich zu einer reinen PBI-Membran, die keine ionogene Gruppen enthaltende Polymerteilchen enthält, weisen erfindungsgemäße Polymermembranen nach Dotierung eine Leitfähigkeit von ≥ 2,5 S/m bei Raumtemperatur auf. Polymermembranen mit unterschiedlichen Gehalten an ionogene Gruppen enthaltenden Polymerteilchen weisen im undotierten Zustand nur eine sehr geringe Protonenleitfähigkeit auf.

**Tabelle 10) Leitfähigkeitsmessung mit phosphorsäuredotierten Membranen**

| Polymermembran | Dotierungsgrad mit $H_3PO_4$ | σ(Raumtemperatur) |
|---|---|---|
| Reines PBI | 81 Gew % | 3,2 S / m |
| Reines PBI | undotiert (0 Gew %) | < $10^{-6}$ S / m |
| 10 % OGR 1290-4* | 87 Gew % | 4,0 S / m |
| 10 % OBR 1297-1* | 86 Gew % | 4,4 S / m |
| 10 % OBR 1297-1* | undotiert (0 Gew %) | $4 \times 10^{-4}$ S / m |
| 30 % OBR 1297-1* | 86 Gew % | 3,5 S /m |
| 30 % OBR 1297-1* | undotiert (0 Gew %) | $3 \times 10^{-4}$ S / m |
| 50 % OBR 1297-1* | 89 Gew % | 3,6 S / m |
| 50 % OBR 1297-1* | undotiert (0 Gew %) | $2 \times 10^{-4}$ S /m |
| 10 % OBR 1294-1* | 82 Gew % | 3,7 S / m |
| 20 % OBR 1294-1* | 84 Gew % | 3,9 S / m |
| 30 % OBR 1294-1* | 79 Gew % | 3,1 S / m |
| 50 % OBR 1294-1* | 78 Gew % | 2,6 S / m |
| *Mikrogelgehalt in Gew % bezogen auf den PBI-Gehalt in % nach Tabelle 8) | | |

**Beispiel 8**

Messung der dynamisch-mechanischen Eigenschaften

Dynamisch-Mechanische Analysen (DMA) an undotierten Membranen werden mit einer DMA 242 C der Firma Netsch Gerätebau durchgeführt. Die Messungen werden im Zugmodus mit den nachfolgenden Messparametern durchgeführt: Temperaturbereich -50 bis 480 °C, Heizrate 3 K/min, Frequenz 1 Hz, Proportionalitätsfaktor 1,1, Maximale dynamische Kraft: 7,1 N, Zusätzliche statische Vorkraft: 0 N, Amplitude: 40 μm. Zur Bestimmung der Glasübergangstemperatur werden die Maxima der tan-δ-Kurven herangezogen. Tabelle 11) und Figur 1 geben die Ergebnisse der Messungen wieder.

Als Vorläufer für die Erzeugung ionogene Gruppen enthaltender Polymerteilchen im PBI-Polymer wird das Mikrogel OBR-1297-1 eingesetzt.

Für reines PBI, das keine ionogene Gruppen enthaltende Polymerteilchen enthält, kann eine Glasübergangstemperatur von 420 °C bestimmt werden. Bei dieser Temperatur erreicht das freie Volumen innerhalb des Polymers ein Ausmaß, welches großen Teilen der Polymerketten eine Beweglichkeit ermöglicht und die Materialeigenschaften des Polymers vom harten Glaszustand in den Gummizustand übergehen lässt. Die Anwesenheit von ionogene Gruppen enthaltenden Polymerteilchen in Gewichtsanteilen von 10 und 30 Gewichtsprozent in der PBI-Matrix bewirkt eine Erniedrigung der Glasübergangstemperatur auf 340 bzw. 295 °C durch den weichmachenden Effekt der Polymerteilchen. Hingegen bewirkt ein Anteil von mehr als 50 Gewichtsprozent Polymerteilchen keine weitere Erniedrigung der Glasübergangstemperatur für das PBI-Matrixpolymer, jedoch wird bei 50 Gewichtsprozent ein ausgeprägter Glasübergang

des Materials aus ionogene Gruppen enthaltenden Polymerteilchen bei einer Temperatur von 89 °C sichtbar. Dieses Phänomen kann dahingehend gedeutet werden, dass bei einem Anteil von mehr als 50 Gewichtsprozent die Perkolationsgrenze der ionogene Gruppen enthaltenden Polymerteilchen überschritten ist, und sich eine zusammenhängende Phase aus sich gegenseitig berührenden Polymerteilchen ausgebildet hat, während bei weniger als 50 Gewichtsprozent-Anteil (insbesondere weniger als 40 Gew.-%) an ionogene Gruppen enthaltenden Polymerteilchen die letzteren von einander isoliert in der PBI- Matrix eingebettet vorliegen.

**Tabelle 11) DMA-Messungen an erfindungsgemäßen Polymermembranen**

| Polymermembran | Ionogene Gruppen enthaltende Polymerteilchen $T_g$ [°C] | PBI-Matrix $T_g$ [°C] |
|---|---|---|
| Nur PBI | --- | 420 °C |
| 10 % OBR 1297-1* | --- | 340 °C |
| 30 % OBR 1297-1* | --- | 295 °C |
| 50 % OBR 1297-1* | 89 °C | 295 °C |
| *Mikrogelgehalt in Gew % bezogen auf den Polybenzimidazolgehalt in % nach Tabelle 8) | | |

**Beispiel 9**

Herstellung einer Brennstoffzelle

Die nach dem Beispiel 4 hergestellten Membranen werden in 104 $cm^2$ große quadratische Stücke geschnitten und mit kommerziell erhältlichen ELAT-Elektroden mit 2,0 $mg/cm^2$ Pt-Beladung und einer Fläche von 50 $cm^2$ der Firma E-TEK kombiniert, welche jeweils mit 0,68 g Phosphorsäure imprägniert werden. Der Membran-Elektroden-Sandwich wird zwischen planparallelen Platten 4 h bei 160 °C und 50 bar als Membran-Elektroden-Einheiten verpresst. Die so erhaltenen Membran-Elektroden-Einheiten werden in eine übliche Anordnung in die Testbrennstoffzelle der Firma Fuel Cell Technologies, Inc. eingebaut und mit einem Anpressdruck von 15 bar verschlossen.

**Beispiel 10**

Bestimmen der Leistungsgarameter der Brennstoffzellen

Die Zellen gemäß Beispiel 9 werden an einem handelsüblichen Brennstoffzellenteststand FCATS Advanced Screener der Firma Hydrogenics Inc. angeschlossen und in den Betriebszustand bei 160 °C und 3 bar (absolut) versetzt. Tabelle 12) fasst die Leistungsparameter zusammen, welche mit trockenen Gasen erreicht wurden.

**Tabelle 12) Leistungsparameter**

| | P bei 0,6V [W/$cm^2$] / ($U_0$ [V]) bei 160 °C, 3 bar) | Gasfluss $H_2$ / Luft, sml/min | Permeation $H_2$ in Luft / Stickstoff |
|---|---|---|---|
| Reines PBI | 0,28 W / $cm^2$ (0,79 V) | 914 / 2900 | 3000 / 3000 ppm |
| 10 % OBR 1294-1 | 0,24 W / $cm^2$ (0,98 V) | 783 / 2486 | 0 / 0 ppm |
| 20 % OBR 1294-1 | 0,31 W / $cm^2$ (1,02 V)<br>0,30 W / $cm^2$ (1,03 V) | 783 / 2486<br>914 / 2900 | 0 / 0 ppm |
| 30 % OBR 1294-1 | 0,34 W / $cm^2$ (1,01 V) | 914 / 2900 | 0 / 0 ppm |
| 50 % OBR 1294-1 | 0,29 W / $cm^2$ (1,00 V) | 783 / 2486 | 10 / 3000 ppm |
| 10 % OBR 1290-4 | 0,36 W / $cm^2$ (1,05 V) | 1044 / 3314 | 0 / 0 ppm |
| Erläuterungen:<br>P bei 0,6V: Leistung bei einer Spannung von 0,6 Volt<br>$U_0$ : Ruhespannung ohne Stromabnahme | | | |

**Beispiel 11**

Bestimmen der Langzeitstabilität der Brennstoffzellen

Die Zelle gemäß Beispiel 9 mit einer Polymerelektrolytmembran mit auf OBR 1290-4 basierenden Polymerteilchen (10 % bezogen auf die PBI-Matrix) wird an einen handelsüblichen Brennstoffzellenteststand FCATS Advanced Screener der Firma Hydrogenics Inc. angeschlossen und in den Betriebszustand bei 160 °C und 3 bar absolut versetzt. Figur 2 stellt die Entwicklung der Spannung in Abhängigkeit der Zeit beim Betriebspunkt 0,5 $A/cm^2$ dar und fasst die Leistungsparameter zusammen, welche mit trockenen Gasen erreicht wurden. Es werden trockene Gase mit einem Gasfluß von 261 sml/min für Wasserstoff und einem Gasfluß von 829 sml/min für Luft verwendet. Über eine Betriebsdauer von 1100 h zeigt eine auf dem Mikrogel OBR 1290-4 basierende Membran-Elektroden-Einheit einen Spannungsabfall von 48 $\mu$V / h. Eine auf reinem PBI basierende Membran-Elektroden-Einheit, deren Polymerelektrolytmembran keine ionogene Gruppen enthaltende Polymerteilchen enthält, zeigt von Betriebsbeginn an stromlos eine Ruhespannung von 0,8 V und ist daher nicht für den Langzeitbetrieb geeignet.

**Patentansprüche**

1. Polymerelektrolytmembran für Hochtemperaturbrennstoffzellen in einem Temperaturbereich bis etwa 200°C, umfassend eine Polymermatrix aus mindestens einem basischen Polymer und ein oder mehrere Dotierungsmittel, wobei ionogene Gruppen enthaltende Teilchen mit einem mittleren Teilchendurchmesser im Nanometerbereich in die Polymermatrix eingebettet sind und die ionogene Gruppen enthaltenden Teilchen in einer Konzentration von weniger als 50%, bezogen auf die Masse der Polymermatrix, homogen in der Polymermatrix verteilt sind.

2. Polymerelektrolytmembran nach Anspruch 1, wobei die ionogene Gruppen enthaltenden Teilchen hauptsächlich aus einem oder mehreren organischen Polymer(en) und/oder Oligomer(en) aufgebaut sind.

3. Polymerelektrolytmembran nach einem der Ansprüche 1 bis 2, wobei die ionogene Gruppen enthaltenden Teilchen hauptsächlich aus einem kautschukartigen Polymer oder Oligomer oder einem nicht-kautschukartigen Polymer oder Oligomer, vorzugsweise einem thermoplastischen Polymer oder Oligomer, aufgebaut sind.

4. Polymerelektrolytmembran nach einem der Ansprüche 1 bis 3, wobei die ionogene Gruppen enthaltenden Teilchen an der Oberfläche oder in dem gesamten Teilchen ionogene Gruppen, vorzugsweise kovalent gebundene Säuregruppen, aufweisen.

5. Polymerelektrolytmembran nach Anspruch 4, wobei die Säuregruppen Carbonsäure-, Sulfonsäure-, Phosphonsäure- und/oder Phosphorsäuregruppen sind.

6. Polymerelektrolytmembran nach einem der Ansprüche 1 bis 5, wobei die ionogene Gruppen enthaltenden Teilchen organische Polymere und/oder Oligomere sind, die aus mindestens Polystyrol und Vinylsulfonsäure hergestellt sind.

7. Polymerelektrolytmembran nach einem der Ansprüche 1 bis 6, wobei die ionogene Gruppen enthaltenden Teilchen einen mittleren Teilchendurchmesser in einem Bereich von 5 nm bis 500 nm aufweisen.

8. Polymerelektrolytmembran nach einem der Ansprüche 1 bis 7, wobei die ionogene Gruppen enthaltenden Teilchen durch Emulsionspolymerisation hergestellt sind.

9. Polymerelektrolytmembran nach einem der vorhergehenden Ansprüche, wobei das bzw. die basische(n) Polymer (e) aus der Gruppe, umfassend Polybenzimidazol, Polypyridin, Polypyrimidin, Polyimidazole, Polybenzthiazole, Polybenzoxazole, Polyoxadiazole, Polychinoxaline, Polythiadiazole, Poly(tetrazapyrene) oder eine Kombination von zwei oder mehreren davon, ausgewählt ist bzw. sind.

10. Polymerelektrolytmembran nach einem der Ansprüche 1 bis 9, wobei das Dotierungsmittel ausgewählt ist aus der Gruppe, umfassend Phosphorsäure, Phosphorsäurederivate, Phosphonsäure, Phosphonsäurederivate, Schwefelsäure, Schwefelsäurederivate, Sulfonsäure, Sulfonsäurederivate oder eine Kombination von zwei oder mehreren davon, und/oder das Reaktionsprodukt von einer mindestens zweibasigen, anorganischen Säure mit einer organischen Verbindung ist und wobei das Reaktionsprodukt eine nicht umgesetzte, acide Gruppe aufweist.

**11.** Polymerelektrolytmembran nach einem der Ansprüche 1 bis 10, welche im wesentlichen wasserfrei ist.

**12.** Polymerelektrolytmembran nach einem der Ansprüche 1 bis 11, die eine Leitfähigkeit von mindestens 2,5 S/m bei einer Temperatur von 25°C aufweist.

**13.** Verfahren zur Herstellung einer Polymerelektrolytmembran für Hochtemperaturbrennstoffzellen in einem Temperaturbereich bis etwa 200°C nach einem der Ansprüche 1 bis 12, umfassend die Schritte:

(a) Herstellen einer Membrangießlösung, mindestens umfassend ein Lösungsmittel, mindestens ein Matrix-bildendes basisches Polymer und ionogene Gruppen enthaltende Teilchen,
(b) Gießen der Membrangießlösung in Membranform und
(c) Entfernen des Lösungsmittels, und in einem weiteren Schritt
(d) Beladen der Membran mit mindestens einem Dotierungsmittel.

**14.** Verfahren nach Anspruch 13, wobei das Lösungsmittel aus der Gruppe umfassend N-Methylpyrrolidon (NMP), Dimethylformamid (DMF), Dimethylsulfoxid (DMSO), Dimethylacetamid (DMAc) und beliebigen Gemischen davon, ausgewählt ist.

**15.** Verwendung der in einem der Ansprüche 1 bis 12 definierten Polymerelektrolytmembran oder der gemäß dem Verfahren nach einem der Ansprüche 13 bis 14 erhältlichen Polymerelektrolytmembran in Hochtemperaturbrennstoffzellen in einem Temperaturbereich bis etwa 200°C.

## Claims

**1.** A polymer electrolyte membrane for high temperature fuel cells in a temperature range up to approximately 200 °C, comprising a polymer matrix consisting of at least one basic polymer and one or more doping agents, wherein particles containing ionogenic groups and having and average particle diameter in the nanometre range are embedded in the polymer matrix and the particles containing ionogenic groups are distributed homogeneously in the polymer matrix in a concentration of less than 50% relative to the weight of the polymer matrix.

**2.** The polymer electrolyte membrane as recited in claim 1, wherein the particles containing ionogenic groups are composed mainly from one or more organic polymer(s) and/or oligomer(s).

**3.** The polymer electrolyte membrane as recited in either claim 1 or 2, wherein the particles containing ionogenic groups are composed mainly from a rubber-like polymer or oligomer or a non-rubber-like polymer or oligomer, preferably a thermoplastic polymer or oligomer.

**4.** The polymer electrolyte membrane as recited in any of claims 1 to 3, wherein the particles containing ionogenic groups have ionogenic groups, preferably covalently bonded acid groups on the surface thereof or in the entire particle.

**5.** The polymer electrolyte membrane as recited in claim 4, wherein the acid groups are carboxylic acid, sulphonic acid, phosphonic acid and/or phosphoric acid groups.

**6.** The polymer electrolyte membrane as recited in any of claims 1 to 5, wherein the particles containing ionogenic groups are organic polymers and/or oligomers that are produced from at least polystyrene and vinylsulphonic acid.

**7.** The polymer electrolyte membrane as recited in any of claims 1 to 6, wherein the particles containing ionogenic groups have an average particle diameter in a range from 5 nm to 500 nm.

**8.** The polymer electrolyte membrane as recited in any of claims 1 to 7, wherein the particles containing ionogenic groups are produced by emulsion polymerisation.

**9.** The polymer electrolyte membrane as recited in any of the preceding claims, wherein the one or more basic polymer (s) is or are selected from the group comprising polybenzimidazole, polypyridine, polypyrimidine, polyimidazoles, polybenzthiazoles, polybenzoxazoles, polyoxadiazoles, polyquinoxalines, polythiadiazoles, poly(tetrazapyrenes) or a combination of two or more thereof.

**10.** The polymer electrolyte membrane as recited in any of claims 1 to 9, wherein the doping agent is selected from the group comprising phosphoric acid, phosphoric acid derivatives, phosphonic acid, phosphonic acid derivatives, sulphuric acid, sulphuric acid derivatives, sulphonic acid, sulphonic acid derivatives, or a combination of two or more thereof, and/or is the reaction product of an at least dibasic, inorganic acid with an organic compound, and wherein the reaction product contains an unreacted acid group.

**11.** The polymer electrolyte membrane as recited in any of claims 1 to 10, and which is substantially anhydrous.

**12.** The polymer electrolyte membrane as recited in any of claims 1 to 11, and which has a conductivity of at least 2.5 S/m at a temperature of 25°C.

**13.** A method for producing a polymer electrolyte membrane for high temperature fuel cells in a temperature range up to approximately 200°C as recited in any of claims 1 to 12, comprising the steps:

(a) producing a membrane casting solution comprising at least one solvent, at least one matrix-forming basic polymer, and particles containing ionogenic groups,
(b) casting the membrane casting solution in the form of a membrane, and
(c) removing the solvent, and in a further step
(d) charging the membrane with at least doping agent.

**14.** The method as recited in claim 13, wherein the solvent is selected from the group comprising N-methylpyrrolidone (NMP), dimethylformamide (DMF), dimethyl sulphoxide (DMSO), dimethylacetamide (DMAc) and any mixtures thereof.

**15.** Use of the polymer electrolyte membrane as defined in any of claims 1 to 12 or the polymer electrolyte membrane obtainable according to the method as recited in either claim 13 or 14, in high temperature fuel cells in a temperature range up to approximately 200 °C.

## Revendications

**1.** Membrane électrolytique polymère destinée à des piles à combustible haute température, pour une gamme de températures allant jusqu'à environ 200 °C, comprenant une matrice polymère constituée d'au moins un polymère à réaction basique et d'un ou de plusieurs agents de dopage, des particules qui contiennent des groupes ionogènes et qui ont un diamètre de particule nanométrique étant incorporées dans ladite matrice polymère et lesdites particules contenant des groupes ionogènes étant réparties de façon homogène dans la matrice polymère, leur concentration étant inférieure à 50 %, par rapport à la masse de ladite matrice polymère.

**2.** Membrane électrolytique polymère selon la revendication 1, lesdites particules contenant des groupes ionogènes étant essentiellement composées d'un ou plusieurs polymère(s) et/ou oligomère(s) organique(s).

**3.** Membrane électrolytique polymère selon l'une des revendications 1 à 2, lesdites particules contenant des groupes ionogènes étant essentiellement composées d'un polymère ou oligomère de type caoutchouc ou d'un polymère ou oligomère type non-caoutchouc, de préférence d'un polymère ou oligomère thermoplastique.

**4.** Membrane électrolytique polymère selon l'une des revendications 1 à 3, lesdites particules contenant des groupes ionogènes comportant des groupes ionogènes, s'agissant préférentiellement de groupes acide à liaison covalente, sur leur surface ou dans l'intégralité desdites particules.

**5.** Membrane électrolytique polymère selon la revendication 4, lesdits groupes acide étant des groupes d'acide carboxylique, sulfonique, phosphoreux et/ou phosphorique.

**6.** Membrane électrolytique polymère selon l'une des revendications 1 à 5, lesdites particules contenant des groupes ionogènes étant des polymères et/ou oligomères organiques qui sont préparés au moins à partir de polystyrène et d'acide vinylsulfonique.

**7.** Membrane électrolytique polymère selon l'une des revendications 1 à 6, lesdites particules contenant des groupes ionogènes présentant un diamètre de particule moyen compris entre 5 nm et 500 nm.

8. Membrane électrolytique polymère selon l'une des revendications 1 à 7, lesdites particules contenant des groupes ionogènes étant préparées par polymérisation en émulsion.

9. Membrane électrolytique polymère selon l'une des revendications précédentes, le ou les polymère(s) à réaction basique étant choisi(s) dans le groupe comprenant le polybenzimidazole, la polypyridine, la polypyrimidine, les polyimidazoles, les polybenzthiazoles, les polybenzoxazoles, les polyoxadiazoles, les polyquinoxalines, les polythiadiazoles, les poly(tétrazapyrènes) ou une combinaison de deux et plusieurs d'entre eux.

10. Membrane électrolytique polymère selon l'une des revendications 1 à 9, ledit agent de dopage étant choisi dans le groupe comprenant l'acide phosphorique, les dérivés d'acide phosphorique, l'acide phosphoreux, les dérivés d'acide phosphoreux, l'acide sulfurique, les dérivés d'acide sulfurique, l'acide sulfonique, les dérivés d'acide sulfonique ou une combinaison de deux ou de plusieurs d'entre eux, et/ou étant le produit de la réaction d'un acide inorganique à double déprotonation avec un composé organique, ledit produit de réaction comportant un groupe acide n'ayant pas réagi.

11. Membrane électrolytique polymère selon l'une des revendications 1 à 10, laquelle est essentiellement exempte d'eau.

12. Membrane électrolytique polymère selon l'une des revendications 1 à 11, laquelle présente une conductivité d'au moins 2,5 S/m à une température de 25°C.

13. Procédé de préparation d'une membrane électrolytique polymère destinée à des piles à combustible haute température, pour une gamme de températures allant jusqu'à environ 200°C, selon l'une des revendications 1 à 12, comprenant des étampes :

(a) préparation d'une solution de coulée de membrane, comprenant au moins un solvant, au moins un polymère à réaction basique formant la matrice, et des particules contenant des groupes ionogènes,
(b) coulée de la solution de coulée de membrane, de façon à obtenir la forme de le membrane et
(c) élimination du solvant,
et, dans une étape supplémentaire,
(d) chargement de la membrane avec au moins un agent de dopage.

14. Procédé selon la revendication 13, ledit solvant étant choisi dans le groupe comprenant le N-méthylpyrrolidone (NMP), le diméthylformamide (DMF), le diméthylsulfoxyde (DMSO), le diméthylacétamide (DMAc) et tous leurs mélanges.

15. Utilisation de la membrane électrolytique polymère définie dans l'une des revendications 1 à 12, ou pouvant être obtenue conformément au procédé selon l'une des revendications 13 à 14, dans des piles à combustible haute température, dans une gamme de températures allant jusqu'à environ 200 °C.

Fig. 1

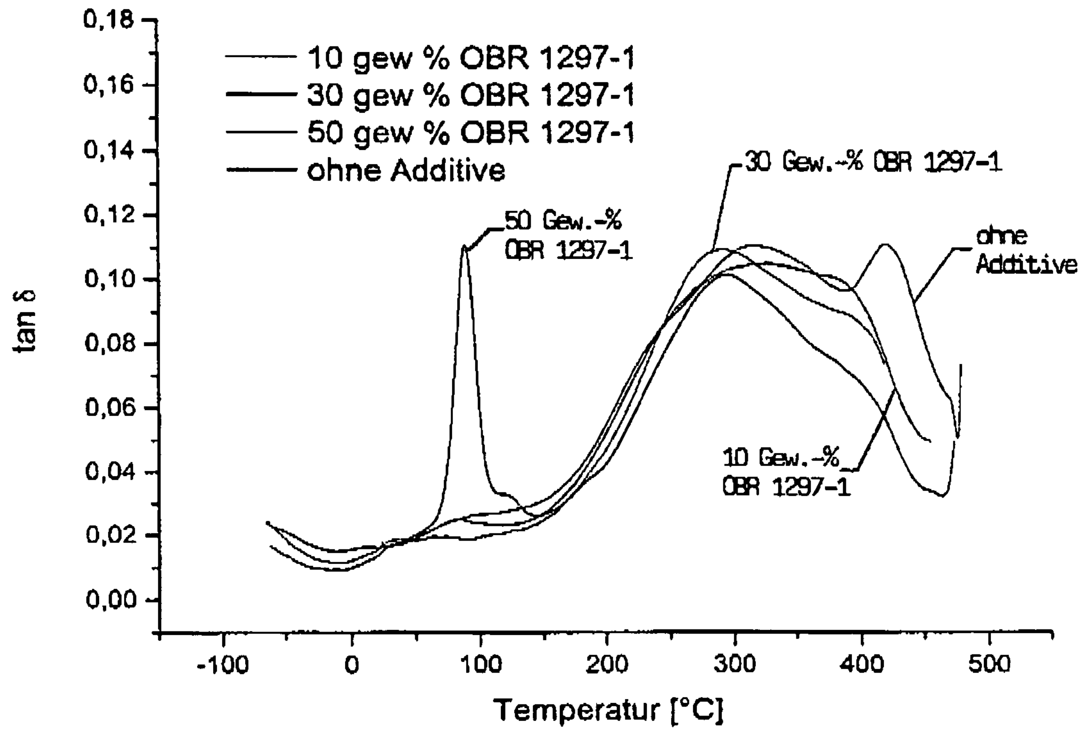


DMA-Messungen

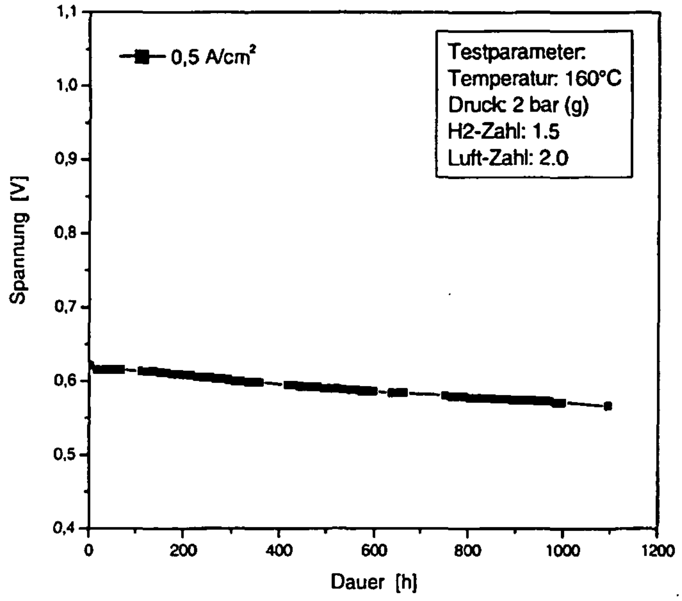


Langzeitstabilität einer erfindungsgemäßen, auf dem Mikrogel OBR 1290-4 basierenden Polymermembran in der Membran-Elektroden-Einheit einer Brennstoffzelle

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 19919988 A1
- DE 10205849 A1
- WO 03063266 A2
- WO 03081691 A2
- DE 102004009396 A1
- US 2187146 A
- US 5302696 A
- US 5442009 A
- WO 2005033186 A1
- WO 2005030843 A1
- US 6399706 B


### In der Beschreibung aufgeführte Nicht-Patentliteratur


- Römpp Lexikon der Chemie. 1997, vol. 2
- **P. A. Lovell ; M. S. El-Aasser.** Emulsion Polymerization and Emulsion Polymers. John Wiley & Sons
- **H. Gerrens.** *Fortschr. Hochpolym. Forsch.,* 1959, vol. 1, 234
- **Vollmert.** Polymer Chemistry. Springer Verlag, 1973
- **H. G. Müller.** *Colloid Polymer Science,* 1996, vol. 267, 1113-1116
- **W. Scholtan ; H. Lange.** *Kolloid-Z u. Z. Polymere,* 1972, vol. 250, 782
- **Houben-Weyl.** Methoden der organischen Chemie. vol. 14/2, 848
- **H. Lange.** Bestimmung der Teilchengrößenverteilung von Latices mit der Ultrazentrifuge. *Kolloid-Zeitschrift und Zeitschrift für Polymere,* 1972, vol. 250